# EUROPEAN PATENT APPLICATION

(11) **EP 2 793 135 A1**
(43) Date of publication of application: **22.10.2014**
(21) Application number: 12857806.9
(22) Date of filing: 05.03.2012
(51) Int. Cl.: G06F 13/00

(54) **CONTENT SERVICE SYSTEM**

(30) Priority: 16.12.2011 JP 2011275904
(71) Applicant: Sharp Kabushiki Kaisha, Osaka-shi, Osaka 545-8522 (JP)
(72) Inventor: YAMADA, Hajime, Osaka-shi, Osaka 545-8522 (JP)
(74) Representative: Müller - Hoffmann & Partner
(86) International application number: PCT/JP2012/055552
(87) International publication number: WO 2013/088750

(57) **Abstract**

A method by which a content-usage device connected to a network acquires a usable-service list from a server, and provides a service to a user on the basis of the information shown on the service list, wherein it is not possible to change the services shown in response to conditions, and therefore the service does not conform to the user's needs and is not useful. [Solution] The present invention provides a content service system having a presentation-condition server device for transmitting presentation conditions for identifying a limited content list, the limited content list being a list of the part of the content, from a distributed content list, presented to the user on the content-usage device.

## Description

### [Technical Field]

The present invention relates to a content service system and a presentation-condition server device and the like.

### [Background Art]

A method in which a content-usage device connected to a network acquires a list of usable services (service list) from a server and provides a service to a user on the basis of information described in this service list has been generally practiced. Moreover, Patent Literature 1 discloses a method of providing a multicast with security ensured on a local access network by using a network access unit provided with a channel-request checking function and an allowed channel list. At this time, the channel request from the user is checked in relation with the allowed channel list and is transferred only when allowed.

### [Citation List]

### [Patent Literature]

Patent Literature 1: National Publication of International Patent Application No. 2004-515158

### [Summary of Invention]

### [Problem to be Solved by Invention]

However, in the method of providing a service to a user on the basis of the information described in the service list acquired from the server, only equal connection to the service described in the service list is provided in general. Similarly, in the above-described Patent Literature 1, the network access unit compares the allowed channel list received from a network relay station with a selected station list from the user and controls an access to the channel, but no narrowing is performed before the user selects a station. That is, if rejection of usage is desired even when reception is possible (a content not to be shown to children, for example), the user has only passive means of non-selection of the station. As described above, since the presented service cannot be changed in accordance with situations, there is a problem that the user's needs are not met, which is inconvenient.

### [Solution to Problem]

The present invention was made in view of such circumstances and proposes a content service system comprising a plurality of content server devices each providing a content usable on a network, a content-list server device for distributing a content list which is a list of contents provided by the plurality of content server devices, a presentation-condition server device for transmitting a presentation condition for extracting a limited content list which is a list of a part of contents presented to a user on the content-usage device from the distributed content list, and a plurality of the content-usage devices each receiving the content list from the content-list server device and using the content provided by the content server device.

Moreover, in the presentation-condition server device, it is determined whether or not to transmit a predetermined presentation condition by using a content-usage device ID acquired from the content-usage device, and if a determination result is that the presentation condition should be transmitted, the presentation condition is transmitted to the content-usage device identified by the content-usage device ID. At this time, in the content-usage device, a limited content list is extracted from the content list by using the received presentation condition and is presented to the user. Moreover, in addition to these, the presentation-condition server device for transmitting the presentation condition so that the limited content list including a list of contents having an attribute desired to be used on the content-usage device is presented, or a presentation condition for presenting the limited content list including a list of contents according to a processing form of the content of the content-usage device or a presentation condition for presenting the limited content list including a list of contents according to preference information relating to a usage content of a user inputted by the user is proposed.

### [Advantageous Effect of Invention]

In the content service system according to the present invention, by providing the presentation-condition server device and transmitting a predetermined presentation condition to the content-usage device, only a part of contents meeting the needs of the user among the content list is presented to the user on the content-usage device. Since the presented information is limited to those needed, selection becomes easy, and convenience for the user is high. Moreover, if rejection of usage is desired even when reception is possible (a content not to be shown to children, for example), the content to be presented can be changed in accordance with a situation, which is secure.

### [Brief Description of the Drawings]

[Fig. 1] Fig. 1 is a conceptual view (1) for explaining an outline of Embodiment 1.
[Fig. 2] Fig. 2 is a conceptual view (2) for explaining an outline of Embodiment 1.
[Fig. 3] Fig. 3 is a diagram (1) illustrating functional blocks of Embodiment 1.
[Fig. 4] Fig. 4 is a diagram (2) illustrating functional blocks of Embodiment 1.
[Fig. 5] Fig. 5 is a diagram (3) illustrating functional blocks of Embodiment 1.
[Fig. 6] Fig. 6 is a diagram (4) illustrating functional blocks of Embodiment 1.
[Fig. 7] Fig. 7 is a view (1) illustrating a hardware configuration of Embodiment 1.
[Fig. 8] Fig. 8 is a view (2) illustrating a hardware configuration of Embodiment 1.
[Fig. 9] Fig. 9 is a diagram (1) illustrating a flow of processing in Embodiment 1.
[Fig. 10] Fig. 10 is a diagram (2) illustrating a flow of processing in Embodiment 1.
[Fig. 11] Fig. 11 is a conceptual view for explaining an outline of Example 1 in Embodiment 2.
[Fig. 12] Fig. 12 is a diagram illustrating functional blocks of Example 1 in Embodiment 2.
[Fig. 13] Fig. 13 is a view illustrating a hardware configuration of Example 1 in Embodiment 2.
[Fig. 14] Fig. 14 is a diagram illustrating a flow of processing of Example 1 in Embodiment 2.
[Fig. 15] Fig. 15 is a conceptual view for explaining an outline of Example 2 in Embodiment 2.
[Fig. 16] Fig. 16 is a diagram illustrating functional blocks of Example 2 in Embodiment 2.
[Fig. 17] Fig. 17 is a view illustrating a hardware configuration of Example 2 in Embodiment 2.
[Fig. 18] Fig. 18 is a diagram illustrating a flow of processing of Example 2 in Embodiment 2.
[Fig. 19] Fig. 19 is a conceptual view for explaining an outline of Example 3 in Embodiment 2.
[Fig. 20] Fig. 20 is a diagram illustrating functional blocks of Example 3 in Embodiment 2.
[Fig. 21] Fig. 21 is a view illustrating a hardware configuration of Example 3 in Embodiment 2.
[Fig. 22] Fig. 22 is a diagram illustrating a flow of processing of Example 3 in Embodiment 2.
[Fig. 23] Fig. 23 is a conceptual view for explaining an outline of Example 4 in Embodiment 2.
[Fig. 24] Fig. 24 is a diagram illustrating functional blocks of Example 4 in Embodiment 2.
[Fig. 25] Fig. 25 is a view illustrating a hardware configuration of Example 4 in Embodiment 2.
[Fig. 26] Fig. 26 is a diagram illustrating a flow of processing of Example 4 in Embodiment 2.

### [Description of Embodiments]

Best embodiments for carrying out each invention will be described below. It is noted that the present invention is not limited to those embodiments and may be performed in various forms within a range not departing from the gist thereof. Embodiment 1 mainly describes claims 1 to 4 and claims 9 to 11 and the like. Embodiment 2 mainly describes claims 5 to 8 and the like.

### «Embodiment 1»

### <Embodiment 1: Outline>

This embodiment is a content service system composed of a plurality of content server devices, a content-list server device, a presentation-condition server device, and a plurality of content-usage devices.

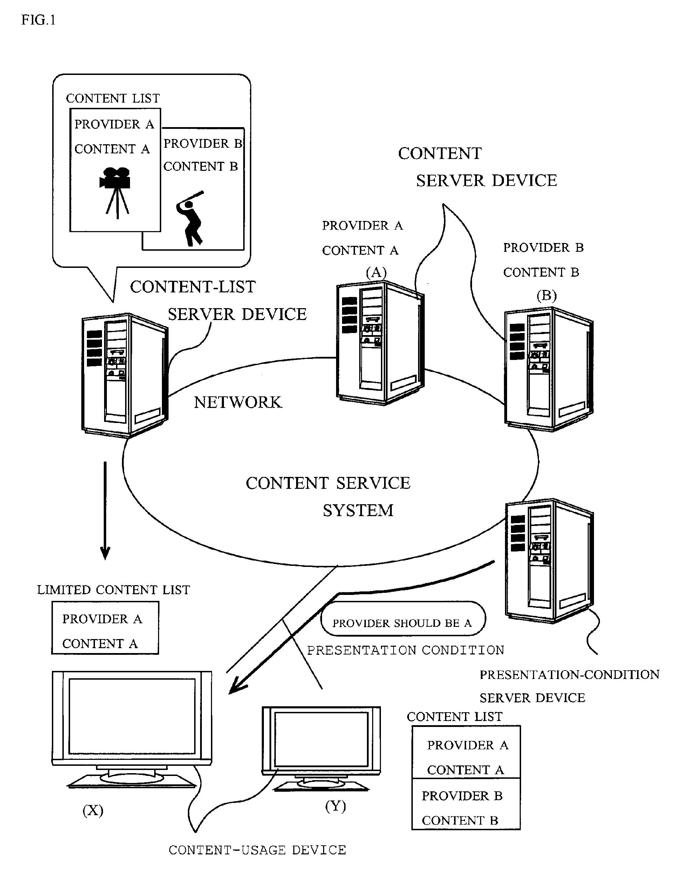

Fig. 1 illustrates an example of the content service system of the present embodiment. This invention is a content service system having an object that the content server device having received a request from the content-usage device provides a content usable on a network. There are a plurality of content server devices in this system, but only two, that is, (A) and (B) are illustrated in Fig. 1. As an example, in the content server device (A), a content A (movie content, for example) is provided by a provider A, and in the content server device (B), a content B (sport content, for example) is provided by a provider B.

A content list which is a list collecting contents provided from these plurality of content server devices is accumulated in the content-list server device and is distributed to the content-usage devices. At this time, the presentation-condition server device transmits a presentation condition for extracting a limited content list which is a list of a part of contents presented to a user on the content-usage device among the distributed content list to the content-usage device. The content-usage device receives the limited content list from the content-list server device and receives provision of the content from the content server device on the basis of this presentation condition.

Here, as an example, assume that a presentation condition that only a content provided by a provider A is presented to the user is transmitted by the presentation-condition server device to a content-usage device (X). At this time, the content-usage device (X) extracts a limited content list including only the content provided by the provider A on the basis of the above-described presentation condition in the content list distributed by the content-list server device and presents the list to the user. Assume that the user of the content-usage device (X) makes selection or the like as appropriate from the limited content list and makes a request of a content A to the content server device. The content A is provided by the content server device having received the request, and the content A is made usable on the content server device.

Moreover, this content service system assumes that a plurality of content-usage devices are used, and Fig. 1 illustrates only (X) and (Y). Here, assume that the content-usage device (X) is a type 1 content-usage device which can access the presentation-condition server device, while the content-usage device (Y) is a type 2 content-usage device which cannot access the presentation-condition server device. The content-usage device (X) which can access the presentation-condition server device receives the presentation condition from the presentation-condition server device and extracts a limited content list which is a partial list from the content list on the basis of that and presents it to the user. On the other hand, the content-usage device (Y) which cannot access the presentation-condition server device receives all the content lists from the content-list server device and presents all to the user. The user who wants to make selection from all the options may only use the type 2 content-usage device, and the devices can be used separately depending on preference of the user using this content service system, which is advantageous.

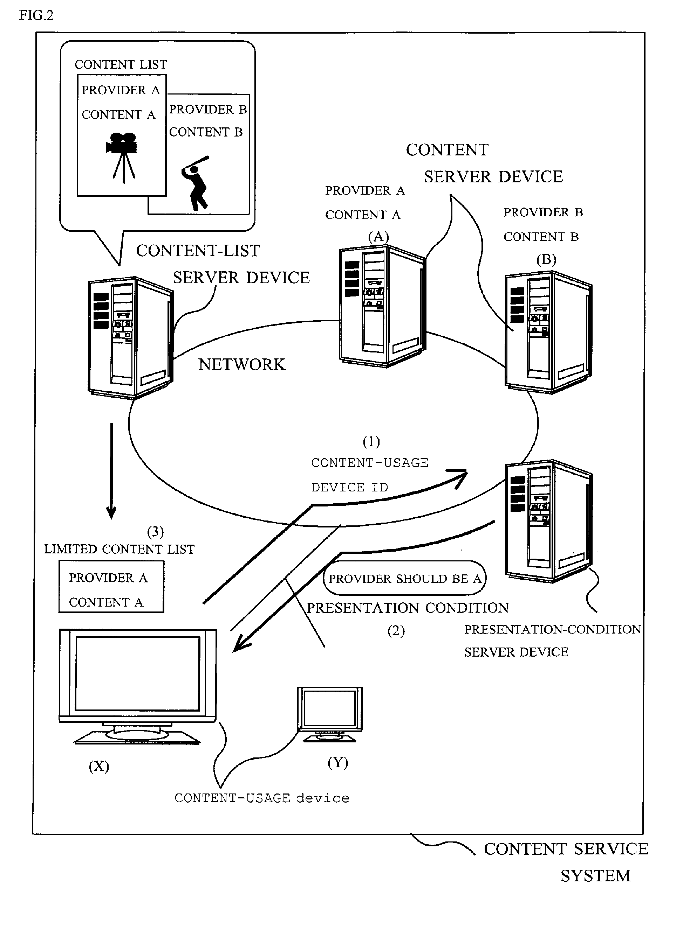

Fig. 2 illustrates another example of the content service system of this embodiment. Assume that, when the content-usage device is to receive a content list from the content-list server device, the content-usage device accesses the presentation-condition server device prior to receipt of the content list, and numerals (1) to (3) in the figure represent an order of a flow of processing in this system. First, the content-usage device outputs a content-usage device ID which is an ID by which it is identified on the network to the presentation-condition server device (1). Subsequently, the presentation-condition server device transmits a presentation condition to the content-usage device identified by the content-usage device ID (2). At this time, determination processing is executed on the presentation-condition server device on whether or not to transmit the presentation condition. After that, the content-usage device receives the content list from the content-list server device and extracts a limited content list which is a part of the content list on the basis of the above-described presentation condition and presents it to the user (3).

<Embodiment 1: Functional configuration>

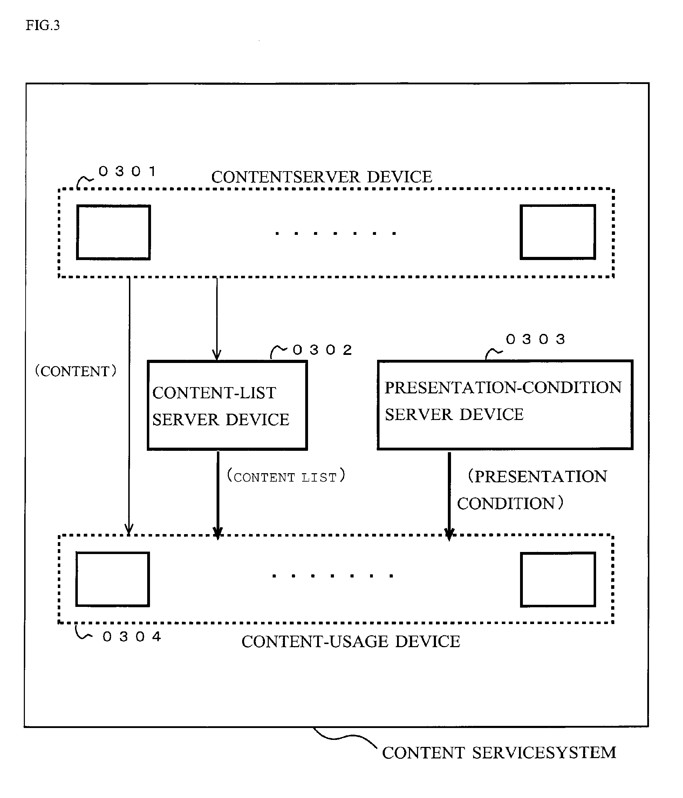

Figs. 3 to 6 illustrate an example of a functional block in the content service system of this embodiment. It is noted that each of the functional blocks described below may be realized by hardware, or software which can obtain its behavior by developing itself on a memory and controlling the hardware or a combination of the hardware and the software. More specifically, a CPU, a main memory, a bus or a secondary storage device (hard disk, non-volatile memory, storage media such as a CD and a DVD, and a reading drive of those media and the like), a hardware constituting unit such as an input device used for information input, a printing device and a display device, other external peripheral devices and the like, an interface for those external peripheral devices, a communication interface, a driver program for controlling the hardware and other application programs, other application for user interface and the like can be included. Alternatively, the functional block of this system may be also realized by dedicated hardware. Moreover, data inputted from the input device or any other interfaces and held on the memory or hard disk is processed or accumulated, and an instruction for controlling each of the above-described hardware and software is created by calculation processing of the CPU conforming to the program developed in the main memory.

Moreover, the present invention can be not only realized as a system or a device constituting it but also realized as a method. Moreover, a part of such invention can be also constituted as software. Furthermore, a software product used for causing a computer to execute such software and a recording medium in which the product is fixed are naturally included in a technical range of the present invention (the same applies throughout this Specification).

Fig. 3 illustrates an example of the functional block of the content service system in the present embodiment. The content service system of this embodiment illustrated in Fig. 3 consists of a "content server device" (0301), a "content-list server device"

(0302), a "presentation-condition server device" (0303), and a "content-usage device" (0304). It is noted that the content server device (0301) and the content-usage device (0304) are present in plural in this system, and names of each of the devices collectively refer to the plurality of devices in some cases.

The "content server device" (0301) is a server for providing a content usable on the network to the content-usage device (0304). The content refers to a program for providing video, sound, characters, figures, colors or combinations of them or information relating to them through a computer. The content of the present invention falls mainly under movies, TV programs, music, games and the like. The content server device is managed mainly by a content provider (provider and the like). The content provider gathers information relating to contents to be provided and attributes of the provider into a list and transmits the list to the content-list server device (0302) which will be described later and causes it to be accumulated therein. Moreover, if a user requests a content via the content-usage device (0304) which will be described later, the content server device provides the content according to the request.

The "content-list server device" (0302) is a server for distributing a content list which is a list gathering contents provided from the plurality of content server devices (0301). The content list is a list created by gathering information relating to the content itself and attributes of the content provider (title of the content, classification such as genre, group of age allowed to view, processing form, volume, date of production, content provider name, identification information and the like, for example). The content list might be provided from a content provider, a platform provider and the like providing a venue of service to a plurality of content providers. The content-list server device accumulates the content list and distributes it to the content-usage device. The distribution of a content list might be performed in accordance with a request from the content-usage device or the presentation-condition server device, at an interval of a predetermined period, when a content list is updated and the like. It is noted that, the distribution of the content list is also performed to the content-usage device which cannot access the presentation-condition server device which will be described later.

The "presentation-condition server device" (0303) is a server for transmitting a presentation condition. The presentation condition refers to a condition for extracting a limited content list and information for indicating this condition. The limited content list refers to a list of a part of contents presented to a user on the content-usage device in the distributed content list. For example, in order that a limited content list including only the content provided by a specific content provider is presented to the user on the content-usage device, providers providing contents can be limited by the presentation condition. Alternatively, the presentation condition can limit the age group allowed to view, the processing form of the content-usage device, and genre according to preference of the user (the details will be described in Embodiment 2 which will be described later).

The "content-usage device" (0304) is a device which receives a content list from the content-list server device (0302) and uses the content provided by the content server device (0301). The content-usage device is not particularly limited as long as the device can use the provided content and includes a TV device, a recording device, a game machine, a mobile terminal device including a smart phone and the like, for example. The user can receive provision of a content by selecting the content from the received content list and making a request to the content server device.

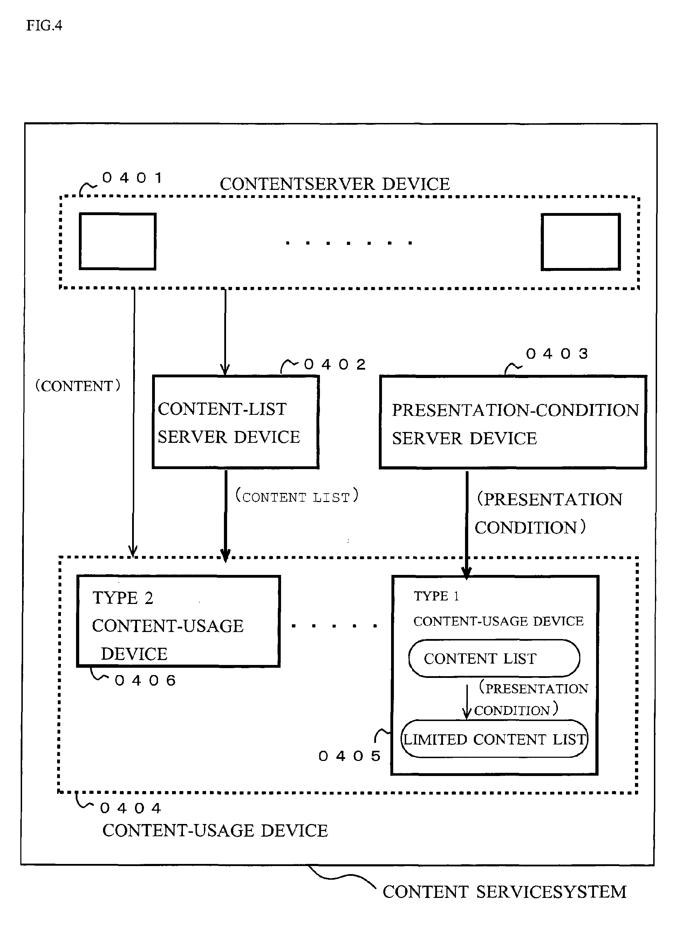

Fig. 4 illustrates a configuration when the content-usage device includes a device which can access the presentation-condition server device (type 1 content-usage device) and a device which cannot access (type 2 content-usage device). (Since each of the constituent elements from 0401 to 0404 is the same as that in Fig. 3, the explanation will be omitted). A type 1 content-usage device (0405) extracts a limited content list which is a partial list from the content list received from the content-list server device by using the presentation condition received from the presentation-condition server device and presents it to the user. If the presentation condition is a condition for extracting a limited content list including only a content provided by a specified content provider, the type 1 content-usage device searches the content list using the information for identifying the content provider as a key and extracts those meeting the condition and creates them into a limited content list.

On the other hand, a type 2 content-usage device (0406) cannot access the presentation-condition server device but receives a content list from the content-list server device. That is, the type 2 content-usage device receives all the content lists and presents all the content lists to the user.

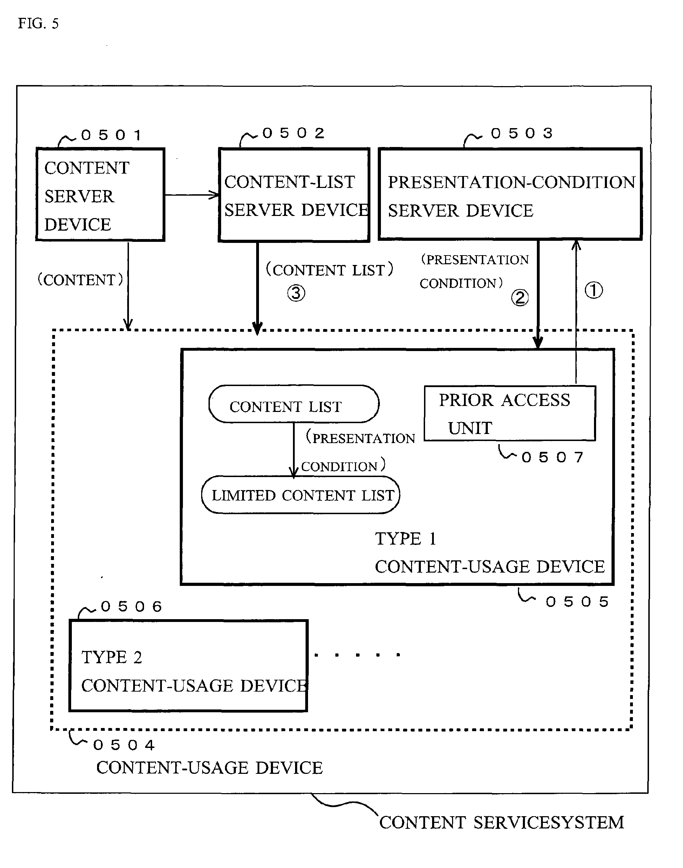

Moreover, Fig. 5 illustrates a configuration in which the type 1 content-usage device has a prior access unit. (Since each of the constituent elements from 0501 to 0506 is the same as that in Figs. 3, 4, the explanation will be omitted). Here, a type 1 content-usage device (0505) has a "prior access unit" (0507), but since the type 2 content-usage device cannot access the presentation-condition server device, it does not have the prior access unit.

The "prior access unit" (0507) of the type 1 content-usage device accesses a presentation-condition server device (0503) prior to receipt of a content list when receiving a content list from a content-list server device (0502). An access to the presentation-condition server device corresponds, first, to a request of the presentation condition from the type 1 content-usage device and the like (arrow 1). At this time, as will be described later, a content-usage device ID which is an ID by which the device is to be identified on the network might be outputted. In response to that, the presentation-condition server device transmits a presentation condition (arrow 2). Subsequently, the content list is received from the content-list server device (arrow 3). Since the type 1 content-usage device has already received the presentation condition when it receives the content list, a limited content list can be reliably extracted from the content list. Though not shown, after the presentation-condition server device transmits a presentation condition, the presentation-condition server device may send a notice that distribution of the content list to the type 1 content-usage device is possible to the content-list server device.

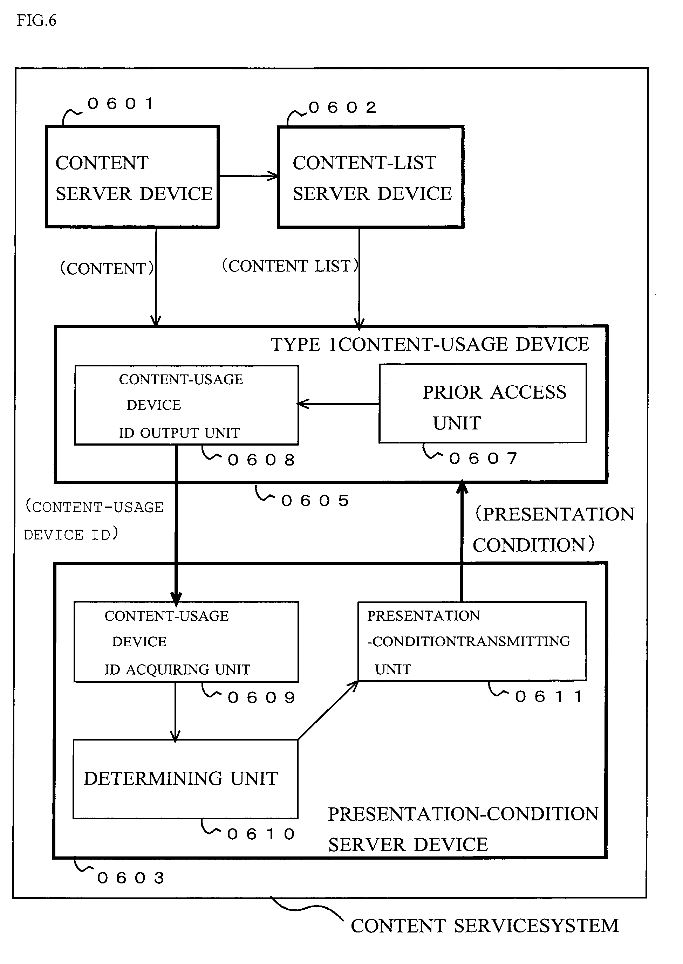

Moreover, Fig. 6 illustrates a configuration in which the presentation-condition server has a determining unit and the like (Since each of the constituent elements from 0601 to 0607 is the same as that in Figs. 3 to 5, the explanation will be omitted). Here, a type 1 content-usage device (0605) has a "prior access unit"

(0607) and a "content-usage device ID output unit" (0608), and the presentation-condition server device (0603) has a "content-usage device ID acquiring unit" (0609), a "determining unit" (0610), and a "presentation-condition transmitting unit" (0611).

The "content-usage device ID output unit" (0608) of the type 1 content-usage device outputs a content-usage device ID. The content-usage device ID is an ID for identifying the content-usage device itself on the network. The output of the content-usage device ID might be made in response to an output request from the prior access unit (0607).

The "content-usage device ID acquiring unit" (0609) of the presentation-condition server device (0603) acquires a content-usage device ID outputted from the type 1 content-usage device. Information for identifying the provider as the manufacturer of the content-usage device can be derived from the content-usage device ID and the like.

The "determining unit" (0610) of the presentation-condition server device (0603) determines whether or not to transmit a predetermined presentation condition by using the acquired content-usage device ID. In the presentation-condition server device, the presentation conditions are accumulated, and presentation conditions such as "if a manufacturer of the content-usage device is the provider A, the content provider is also limited to the same provider A", "if a manufacturer of the content-usage device is the provider B, the content provider is limited to the providers B and C" and the like can be exemplified, for example. In this case, the information for identifying the provider as the manufacturer of the content-usage device is derived by using the content-usage device ID, and search processing is performed to find if a corresponding presentation condition is present or not. If the corresponding presentation condition is present, determination that the presentation condition should be transmitted is made. Other examples of the presentation condition will be explained in Embodiment 2 which will be described later.

When a determination result of the determining unit is that transmission should be made, a "presentation-condition transmitting unit" (0622) of the presentation-condition server device (0603) transmits the presentation condition to the type 1 content-usage device identified by the content-usage device ID.

### <Embodiment 1: Hardware configuration>

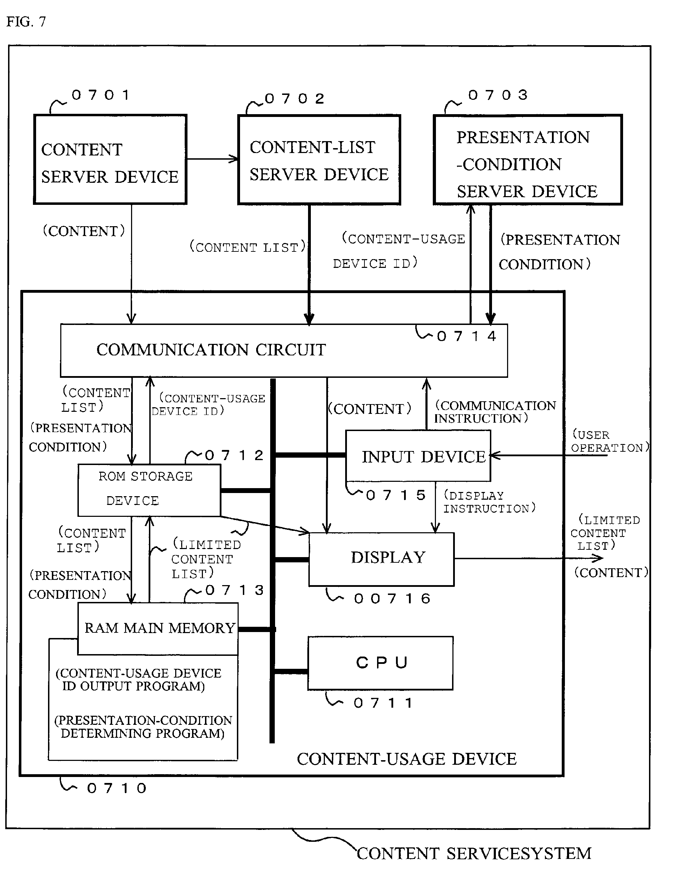

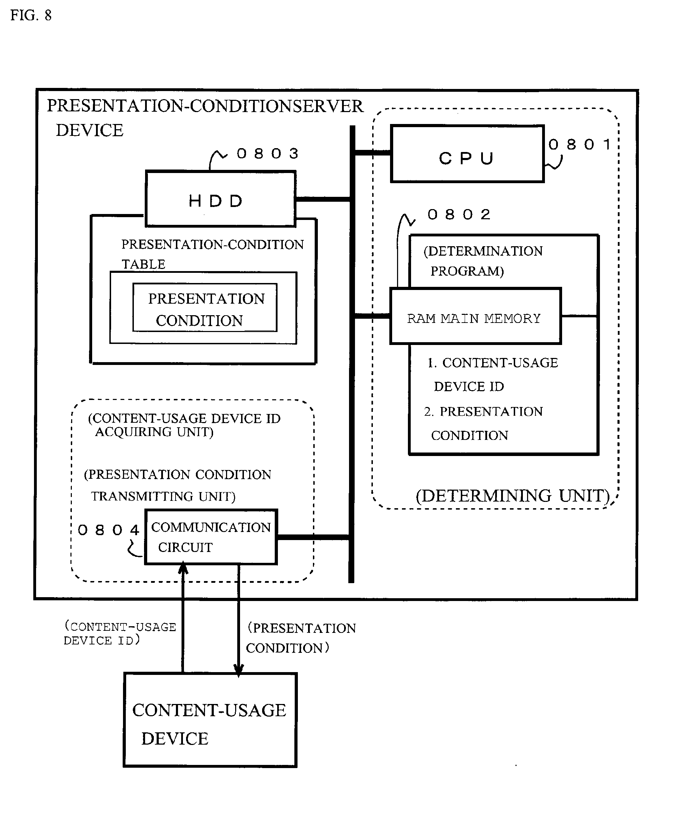

Fig. 7 is a shematic diagram illustrating an example of a hardware configuration of the content service system of this embodiment or particularly the content-usage device, and Fig. 8 is a shematic diagram illustrating an example of a hardware configuration of the presentation-condition server device of the present embodiment. Actions of the respective hardware constituting units in processing execution of each device of the content service system will be explained by using these figures.

The content service system of this embodiment illustrated in Fig. 7 has a content server device (0701), a content-list server device (0702), a presentation-condition server device (0703), and a content-usage device (0710). Moreover, the content-usage device is provided with a "CPU (central processing unit)" (0711), a "ROM (storage device)" (0712), a "RAM (main memory)" (0713), a "communication circuit" (0714), an "input device (0715), and a "display" (0716), a program and data are read out to the RAM, and the CPU refers to the read-out program and executes various calculation processing to the data in accordance with a procedure represented in the program. They are mutually connected by a data communication path such as a system bus and perform information transmission/receipt and processing.

The ROM (0712) stores various programs to be executed by the CPU (0711), and the RAM (0713) provides a work area which is an area for reading out and developing the program in order to execute the program stored in the ROM and a data area temporarily storing data and the like. At this time, the program and the data are read out to the RAM, the CPU refers to the read-out program, specifies a memory address of the ROM or RAM and makes an access so as to mutually transact data, and can execute various types of calculation processing to the data in accordance with the procedure represented in the program. The above is the function of each of the hardware configurations (the same applies throughout the description).

Hereinafter, the procedure of the processing in the content-usage device (0710) of the present invention will be explained. First, with start-up of the content-usage device, each program (content-usage device ID output program, presentation-condition determination program) stored in the ROM is developed in the work area of the RAM. For example, if an operation of an output request of the content-usage device ID is received from a user via an input device, this serves as a trigger, and the CPU executes the content-usage device ID output program developed in the work area of the RAM. The content-usage device ID output program reads out the content-usage device ID from the ROM and outputs it to the presentation-condition server device via the communication circuit (0714). The content-usage device ID output program may be executed each time when a predetermined period of time has elapsed by count using a timer, though not shown in the figures.

When the presentation condition is returned from the presentation-condition server device (0703) (processing in the presentation-condition server will be described later), the content-usage device receives this via the communication circuit and stores it once in the data area of the RAM or the like. This serves as a trigger, and the CPU executes the presentation condition determination program developed in the work area of the RAM. Moreover, an access to the presentation-condition server device allows the content-usage device to receive the content list, and the content-usage device receives the content list distributed from the content-list server device via the communication circuit and stores it once in the data area of the RAM or the like

Subsequently, the presentation-condition determination program executes determination processing so that only a part of a content is presented from the content list by using the presentation condition. More specifically, the presentation-condition determination program reads out the content list and the presentation condition from the RAM, and if the presentation condition limits a content provider, for example, the presentation-condition determination program executes comparison processing between identification information of the content provider included in the content list and the presentation condition. If the identification information of the content provider matching the presentation condition is included in the content list, the content is extracted as a limited content list and stored in the RAM.

Fig. 8 is a diagram illustrating an example of the hardware configuration of the presentation-condition server device of this embodiment. As illustrated in this figure, the presentation-condition server device is provided with a "CPU" (0801) and a "RAM/main memory" (0802), the program and data are read out to the RAM, and the CPU refers to the read-out program and executes various calculation processing to the data in accordance with a procedure represented in the program. As a result, the function of the determination unit and the functions relating to the calculation processing of other constituent requirements are realized. Moreover, the presentation-condition server device is also provided with an "HDD" (0803) holding various types of data and a "communication circuit" (0804) which is the content-usage device ID acquiring unit. The HDD holds presentation conditions. Moreover, attribute information representing an attribute of the content or preference information representing preference of a user relating to the usage content might be included in the presentation condition, which will be described in detail in the subsequent embodiment.

Subsequently, a procedure of processing in the presentation-condition server device of this embodiment will be described below. First, the content-usage device ID outputted from the content-usage device is received via the communication circuit and stored once in the data area of the RAM or the like. This serves as a trigger, and the CPU executes the determination program developed in the work area of the RAM. The determination program determines whether or not to transmit the predetermined presentation condition by using the acquired content-usage device ID. That is, the CPU reads out the presentation condition held in the HDD and searches the presentation conditions by using the content-usage device ID as a key. For example, the information for identifying the provider as the manufacturer of the content-usage device included in the content-usage device ID is derived, for example, and search is made to find if the presentation condition including this is accumulated. If a corresponding one is found, the presentation condition is transmitted to the content-usage device via the communication circuit.

### <Embodiment 1: Processing flow>

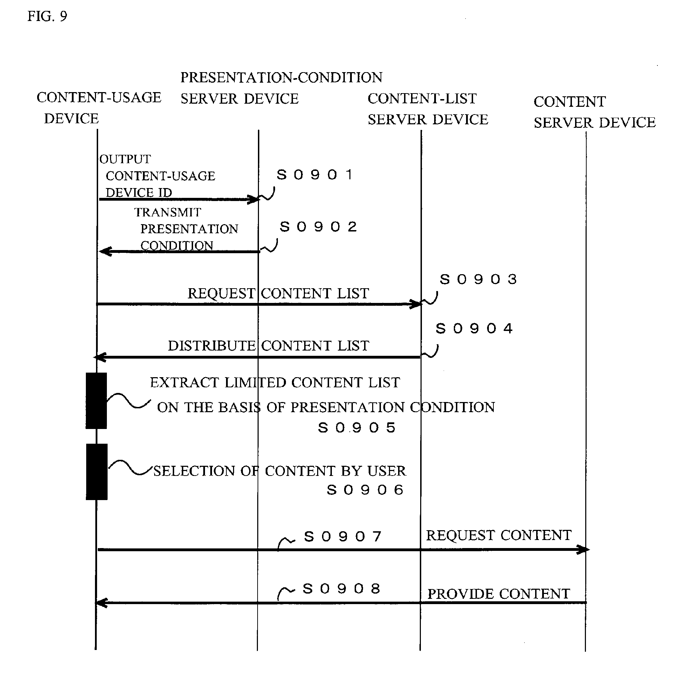

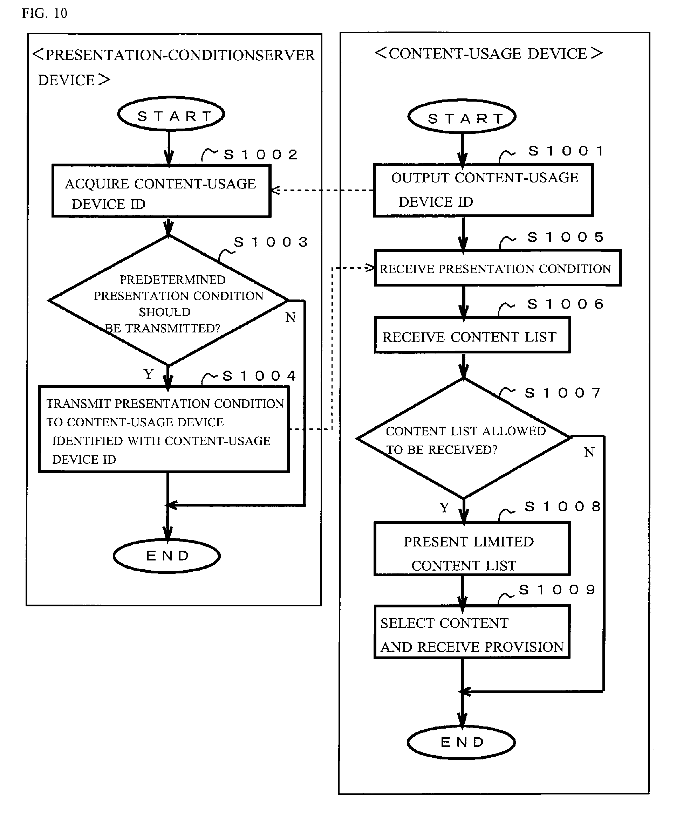

Figs. 9 and 10 illustrate an example of a flow of processing in the content service system of the present embodiment. It is noted that the flow of processing illustrated below can be executed by the program which causes the computer to execute it, and this program can be recorded in a recording medium which can be read by the computer (the same applies to the other flows of processing in this Description).

First, the flow of a series of processing in the content service system of this embodiment will be explained by using Fig. 9. The content-usage device outputs the content-usage device ID to the presentation-condition server device (S0901), and the presentation-condition server device receives it and transmits the presentation condition (S0902).

Subsequently, the content-usage device requests a content list from the content-list server device (S0903), and the content-list server device receives it and distributes a content list (S0904). After that, in the content-usage device a limited content list is extracted from the content list on the basis of the previously received presentation condition (S0905). Moreover, in the content-usage device, the limited content list is presented so that the user can make selection of the content (S0906).

The selected content is requested from the content server device (S0907), and the content server device receives it and provides the content (S0908).

Moreover, a flow of processing focused on transaction between the content-usage device and the presentation-condition server device will be explained by using Fig. 10. The content-usage device outputs the content-usage device ID to the presentation-condition server device (S1001), and the presentation-condition server device acquires it (S1002).

Subsequently, the presentation-condition server device determines whether or not to transmit the predetermined presentation condition by using the acquired content-usage device ID (S1003). If the determination result is that the presentation condition should be transmitted, the presentation-condition server device transmits the presentation condition to the content-usage device identified by the content-usage device ID (S1004), while if the determination result is that the presentation condition should not be transmitted, the processing is finished.

Subsequently, the content-usage device receives the presentation condition from the presentation-condition server device (S1005). Moreover, the content-usage device receives the content list from the content-list server device (S1006). After that, the content-usage device determines whether or not the content list includes a content allowed to be received (S1007) on the basis of the presentation condition. In the case of the determination result that content list is allowed to be received, a limited content list which is a list of a part of the content list is extracted and presented to the user (S1008), and the user selects the content and the like and receives provision of the content (S1009). In the case of the determination result that there is no content list allowed to be received, the processing is finished.

### <Embodiment 1: Effect>

In the content service system according to the invention of the present embodiment, by providing the presentation-condition server device and transmitting the predetermined presentation condition to the content-usage device, only a part of contents meeting the needs of the user among the content list is presented to the user on the content-usage device. Since the presented information is limited to those needed, and convenience for the user is high. On the contrary, for a user who wants to make selection from all the options, it is only necessary that the user uses the type 2 content-usage device, and the content service system can be used separately depending on the user's preference, which is advantageous.

### «Embodiment 2»

### <Embodiment 2: Outline>

The present embodiment is a content service system characterized in that information with various variations such as attribute information representing an attribute of a content desired to be used is transmitted from the content-usage device in addition to the content-usage device ID, and the presentation-condition server device having received it transmits a presentation condition for extracting a limited content list using the respective information.

### <Embodiment 2: Outline of Example 1>

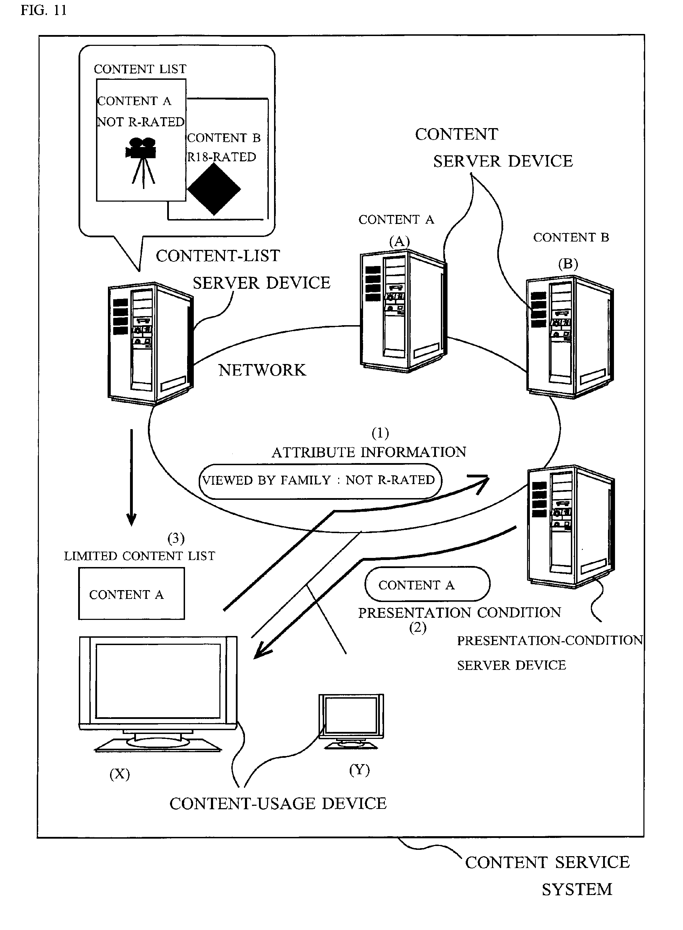

Fig. 11 illustrates an example of a content service system of the present embodiment. First, attribute information representing an attribute of a content desired to be used is transmitted from the content-usage device. Regarding transmission of the attribute information, by inputting a fact that the content is being viewed by a family by operating a button on the content-usage device or the like, for example, the attribute information to the effect that a content not rated R is desired can be transmitted (1). The presentation-condition server device having received it acquires a presentation condition for extracting a limited content list including a list of contents having the attribute desired to be used on the content-usage device by using the attribute information and transmits it (2). Here, the presentation condition that an R-rated content B is precluded from the limited content list is returned. On the other hand, in the content-usage device, the limited content list is extracted from the content list on the basis of this presentation condition (3). Here, the limited content list including a content A and the like is extracted and presented to the user.

### <Embodiment 2: Functional configuration of Example 1>

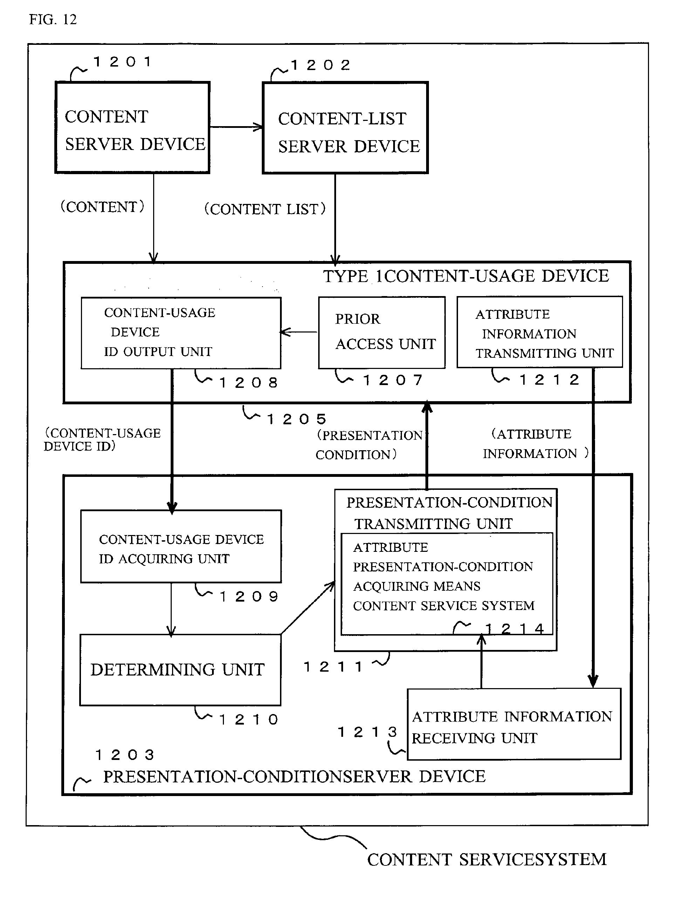

Fig. 12 illustrates an example of a functional block of the content service system in the present embodiment. The content service system of the present embodiment illustrated in Fig. 12 is composed of a "content server device" (1201), a "content-list server device (1202), a "presentation-condition server device" (1203), and a "content-usage device". Here, since the content-usage device can access the presentation-condition server device, it is a "type 1 content-usage device" (1205), and the type 1 content-usage device has a "prior access unit" (1207), a "content-usage device ID output unit" (1208), and moreover, an "attribute information transmitting unit" (1212). Moreover, the presentation-condition server device has a "content-usage device ID acquiring unit" (1209), a "determining unit" (1210), a "presentation-condition transmitting unit" (1211), and moreover, an "attribute information receiving unit" (1213), and the presentation-condition transmitting unit (1211) further has an "attribute presentation-condition acquiring means" (1214). Since each of the constituent elements 1201 to 1211 is the same as that in Figs. 3 to 6, the explanation will be omitted.

The "attribute information transmitting unit" (1212) of the type 1 content-usage device transmits attribute information to the presentation-condition server device. The attribute information refers to information representing an attribute of a content desired to be used. The attributes of a content correspond to an age allowed to view the content, classification of the age limit and the like when the content is viewed, for example. Transmission of the attribute information is performed by an input operation by a user of the type 1 content-usage device. More specifically, by inputting a viewing situation such as viewing by a family or the like through a button operation or the like, a predetermined classification according to the ages of the family or the like is transmitted as the attribute information. Assume that appropriate classification according to the age of each of the family members is set and held in the type 1 content-usage device in advance and this is read out as the attribute information.

The "attribute information receiving unit" (1213) of the presentation-condition server device receives the attribute information transmitted from the type 1 content-usage device. If the age of a viewer is transmitted as the attribute information from the type 1 content-usage device, table data of the classification corresponding to the age may be held in the presentation-condition server device and perform comparison so that an appropriate classification according to the age is derived.

The "attribute presentation-condition acquiring means" (1214) of the presentation-condition transmitting unit of the presentation-condition server device acquires a presentation condition for extracting a limited content list including a list of contents having an attribute desired to be used on the type 1 content-usage device by using the received attribute information. More specifically, if the attribute information represents a "G" class (content that can be viewed by any age group), the presentation condition for precluding R-rated contents is acquired.

### <Embodiment 2: Hardware configuration of Example 1>

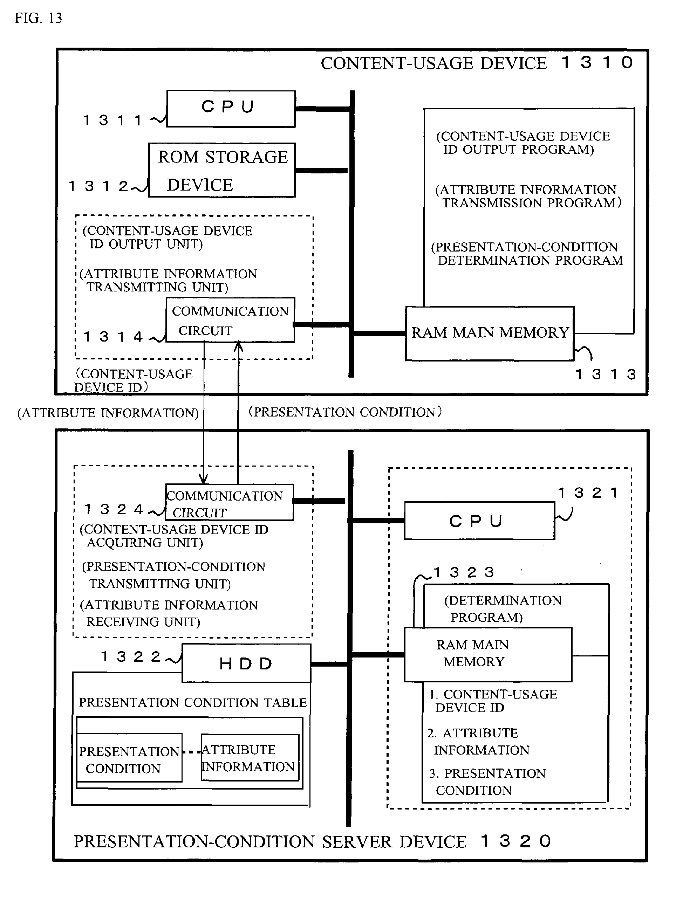

Fig. 13 is an outline view particularly illustrating an example of a hardware configuration of the content-usage device and the presentation-condition server device in the content service system of the present example. Operations of the respective hardware constituting units in processing execution of each device of the content service system will be explained by using this figure.

A content-usage device (1310) has a "CPU (central processing unit)" (1311), a "ROM (storage device)" (1312), a "RAM (main memory)" (1313), and a "communication circuit" (1314), and though not shown in the figure, other input devices, a display and the like are provided. Moreover, the presentation-condition server device (1320) is provided with a "CPU (central processing unit)" (1321), an "HDD" (1322), a "RAM (main memory)" (1323), and a "communication circuit" (1324). Since the hardware configurations of the content-usage device and the presentation-condition server device have been already explained by using Figs. 7 and 8, only new units will be mainly explained.

First, when the content-usage device (1310) receives an operation of transmission of the attribute information from a user via the input device, this serves as a trigger, and the CPU (1311) executes an attribute information transmission program developed in the work area of the RAM (1313). The attribute information transmission program transmits the attribute information to the presentation-condition server device (1320) via the communication circuit (1314). The transmission operation of the attribute information corresponds to inputs of a viewing situation such as viewing by a family and the like, ages of the viewers and the like, and by inputting such information, a predetermined classification according to the ages of the family is transmitted as the attribute information. Specifically, a table representing a correspondence relationship between the ages and the classification of age limits allowing viewing of a content is held in the ROM (1312) in advance, and when the age of a viewer is inputted, search processing is performed using this as a key, and the classification of the age limit, that is, the attribute information is derived. If the viewing situation such as viewing by a family or the like is inputted, the age data of the family inputted and set in advance is read out, the search processing is performed by using the lowest age as a key, and the attribute information is derived.

Subsequently, the presentation-condition server device (1320) receives the attribute information transmitted from the content-usage device (1310) via the communication circuit (1324) and stores it once in the data area of the RAM (1323) or the like. At this time, the content-usage device ID is also stored in the data area of the RAM or the like, and the determination program is executed using this as a trigger. The determination program determines whether or not to transmit a predetermined presentation condition by using the acquired content-usage device ID. That is, the CPU (1321) reads out the presentation condition held in the HDD (1322) and makes a search using the content-usage device ID as a key. At this time, the presentation condition relating to the attribute information is also held in the HDD. If the attribute information represents the "G" class (content that can be viewed by any age group), preclusion of R-rated contents is added to the condition acquired by the previous search using the content-usage device ID as a key and made a presentation condition. The applicable presentation condition is transmitted to the content-usage device via the communication circuit.

On the content-usage device, a limited content list is extracted from the content list by using the received presentation condition. If the presentation condition limits the content provider, for example, comparison processing between the identification information of the content provider included in the content list and the presentation condition is executed. If the identification information of the content provider matching the presentation condition is included in the content list, the content is extracted as a limited content list. Moreover, if the presentation condition limits the class of the attribute of the content, comparison processing between the attribute class of the content included in the content list and the presentation condition is executed. If the attribute class of the content matching the presentation condition is included in the content list, the content is extracted as a limited content list and stored in the RAM (the subsequent processing is similar to that in Embodiment 1).

### <Embodiment 2: Flow of processing of Example 1>

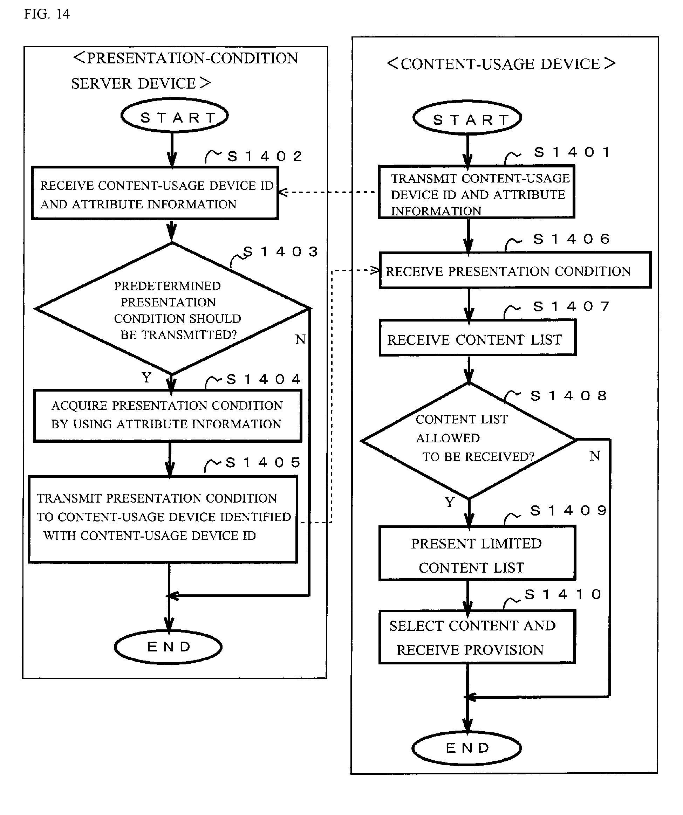

Fig. 14 explains an example of a flow of processing focused on transaction between the content-usage device and the presentation-condition server device in the content service system of the present example. The content-usage device transmits the content-usage device ID and the attribute information to the presentation-condition server device (S1401), and the presentation-condition server device receives them (S1402). Subsequently, the presentation-condition server device determines whether or not to transmit a predetermined presentation condition by using the acquired content-usage device ID (S1403). If the determination result is that the presentation condition should be transmitted, the presentation-condition server device acquires a presentation condition so that a limited content list including a list of contents having an attribute desired to be used on the content-usage device is presented by using the received attribute information (S1404). Subsequently, the acquired presentation condition is transmitted to the content-usage device identified by the content-usage device ID (S1405), and if the determination result is that the presentation condition should not be transmitted, the processing is finished.

Subsequently, the content-usage device receives the presentation condition from the presentation-condition server device (S1406). Moreover, the content-usage device receives a content list from the content-list server device (S1407). After that, the content-usage device determines whether or not a content allowed to be received by the content list is included on the basis of the presentation condition (S1408). In the case of the determination result that the content list allowed to be received is included, a limited content list which is a part of a list of the content list is extracted and presented to the user (S1409), and the user selects the content or the like and receives provision of the content (S1410). In the case of the determination result that there is no content list allowed to be received, the processing is finished.

### <Embodiment 1: Effect of Example 1>

In the content service system according to the invention of the present example, only a content according to the viewing situation of the user is presented to the user on the content-usage device by configuring such that the limited content list is presented by using the attribute information representing the attribute of the content desired to be used. Since the presented information is limited to the appropriate one, contents with antisocial expressions such as sex, violence, cruelty, drug and the like can be precluded so as not to be viewed by children, which is secure.

### <Embodiment 1: Outline of Example 2>

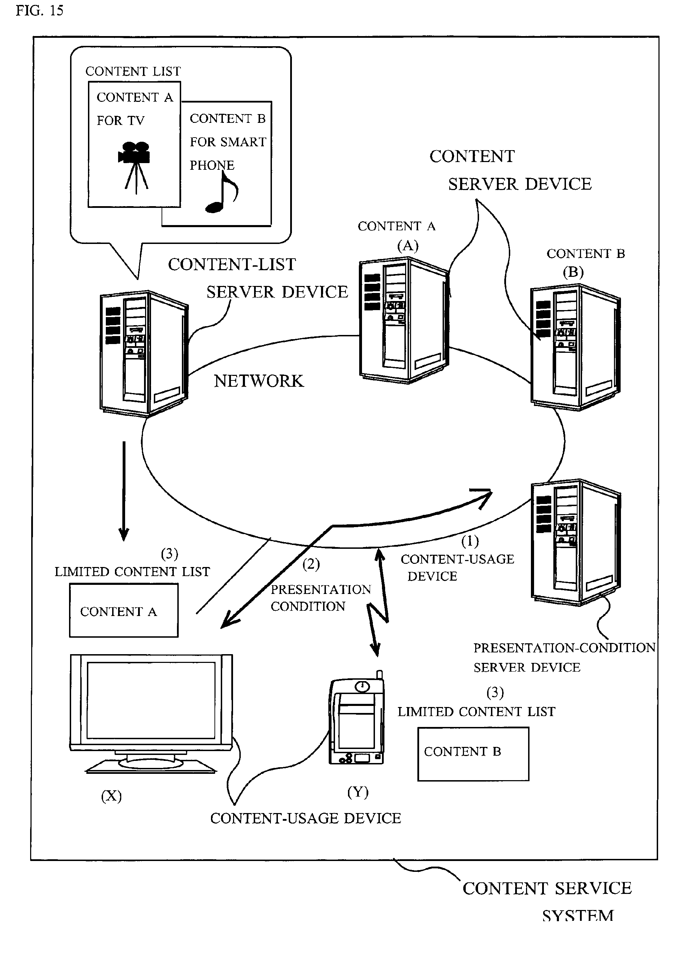

Fig. 15 illustrates an example of a content service system of the present example. First, the content-usage devices (X) and (Y) output content-usage device IDs (1) . The presentation-condition server device having received them, identifies processing forms of the contents of the content-usage devices from those content-usage device IDs and acquires the presentation condition for extracting a limited content list including a list of the contents according to the identified processing forms and transmits it (2). Here, assume that the content-usage device (X) has a processing form of reproducing a content such as digital broadcasting or satellite broadcasting and the like on TV, for example, while the content-usage device(Y) has a processing form such as a smart phone of connecting to the Internet and downloading a content such as various applications. At this time, in accordance with the processing forms of the respective content-usage devices, presentation conditions for extracting a limited content list including a list of contents such as movies and the like for the content-usage device (X) and a list of contents such as music reproduction applications and the like for the content-usage device (Y), for example, are transmitted (3). Upon receipt of them, the content-usage device extracts a limited content list from the content list on the basis of the received presentation condition. Here, limited content lists including a content A such as a movie and the like on the content-usage device (X) and a content B such as a music reproduction application and the like on the content-usage device (Y) are extracted and presented to the user.

### <Embodiment 2: Functional configuration of Example 2>

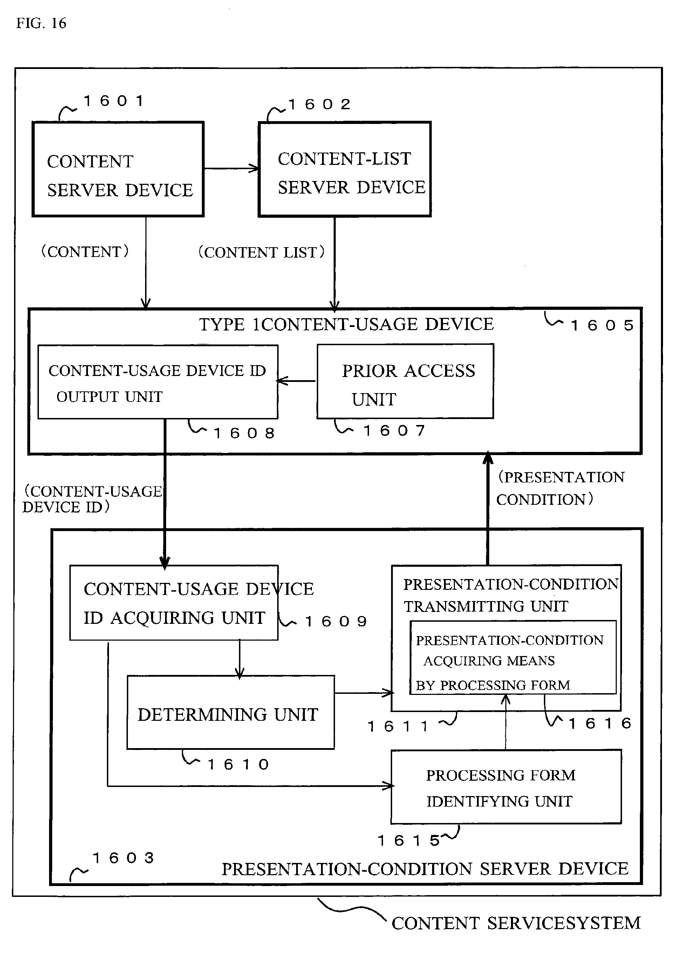

Fig. 16 illustrates an example of a functional block of a content service system in the present example. The content service system of the present embodiment illustrated in Fig. 16 is composed of a "content server device" (1601), a "content-list server device" (1602), a "presentation-condition server device" (1603), and a "content-usage device". Here, since the content-usage device can access the presentation-condition server device, it is "type 1 content-usage device" (1605), and the type 1 content-usage device has a "prior access unit" (1607) and a "content-usage device ID output unit" (1608). Moreover, the presentation-condition server device has a "content-usage device ID acquiring unit" (1609), a "determining unit" (1610), a "presentation-condition transmitting unit" (1611), and moreover, a "processing form identifying unit" (1615), and the presentation-condition transmitting unit (1611) further has "presentation-condition acquiring means by processing form" (1616). Since each of the constituent elements from 1601 to 1611 is the same as that in Figs. 3 to 6, the explanation will be omitted. Moreover, this functional block is based on Embodiment 1, but the attribute information transmitting unit of the content-usage device, the attribute information receiving unit of the presentation-condition server device, and the attribute presentation-condition acquiring means might be provided.

The "processing form identifying unit" (1615) of the presentation-condition server device identifies a processing form of the content of the content-usage device by the content-usage device ID outputted from the type 1 content-usage device. The content-usage device ID includes information of a model or a manufacturer and the like as an ID for identifying the content-usage device, and the processing form of the content is identified by using this information. More specifically, if a model of the content-usage device (X) is TV, for example, it can be identified as a processing form of reproducing a content such as digital broadcasting or satellite broadcasting, while if the model of the content-usage device (Y) is a smart phone, for example, it can be identified as a processing form of connecting to the Internet and downloading a content such as various applications.

The "presentation-condition acquiring means by processing form" (1616) of the presentation-condition transmitting unit of the presentation-condition server device acquires the presentation condition for extracting a limited content list including a list of contents according to the processing form of the identified content. For example, a presentation condition for extracting a limited content list including a list of contents such as movies or the like is acquired for the processing form of reproducing a content such as digital broadcasting or satellite broadcasting, and a presentation condition for extracting a limited content list including a list of contents such as a music reproduction application and the like is acquired for the processing form of connecting to the Internet and of downloading a content such as various applications.

### <Embodiment 2: Hardware configuration of Example 2>

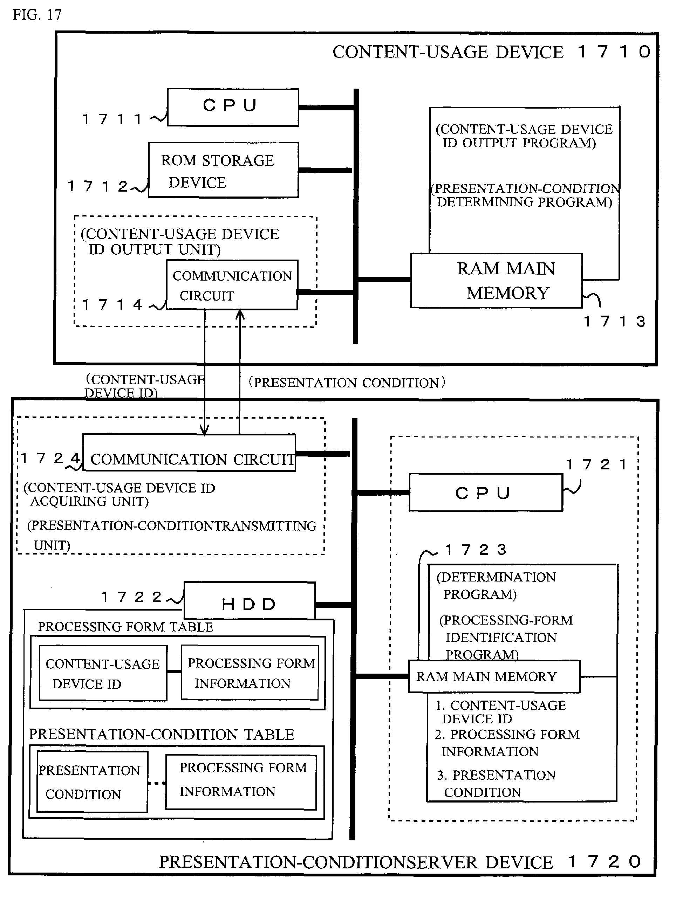

Fig. 17 is an outline view particularly illustrating an example of a hardware configuration of the content-usage device and the presentation-condition server device in the content service system of the present example. The hardware configurations of the content-usage device and the presentation-condition server device have been already explained by using Fig. 12, and new units will be mainly explained.

First, when a content-usage device (1710) receives an operation of transmission of a content-usage device ID from a user via an input device, it transmits a content-usage device ID to a presentation-condition server device (1720) via a communication circuit (1714). Subsequently, the presentation-condition server device receives the transmitted content-usage device ID via the communication circuit (1724) and stores it once in a data area of a RAM (1723) and the like. By using this as a trigger, a processing-form identification program is executed together with the determination program. The processing-form identification program identifies the processing form of the content of the content-usage device from the content-usage device ID. The content-usage device ID includes information such as a model and a manufacturer as an ID for identifying the content-usage device, and the processing form of a content is identified by using this information. More specifically, a CPU (1721) reads out a processing form table held in an HDD (1722) and searches and specifies the processing form information by using the content-usage device ID as a key. If processing form information associated with the content-usage device ID is present in the processing form table, the processing form information is stored once in the RAM, and the determination program is executed.

The determination program determines whether or not to transmit a predetermined presentation condition by using the acquired content-usage device ID. That is, the CPU (1721) reads out the presentation condition held in the HDD (1722) and makes a search by using the content-usage device ID as a key. Moreover, the presentation condition relating to processing form information is also held in the HDD. If the processing form information represents "application download processing", response to a smart phone is added to a condition acquired by making the previous search by using the content-usage device ID as a key and the like so as to have a presentation condition. The applicable presentation condition is transmitted to the content-usage device via the communication circuit.

On the content-usage device, a limited content list is extracted from a content list by using the received presentation condition. For example, if the presentation condition limits a content provider, comparison processing is executed between identification information of the content provider included in the content list and the presentation condition. If the identification information of the content provider matching the presentation condition is included in the content list, the content is extracted as a limited content list. Moreover, if the presentation condition limits a processing form of a content, comparison processing is executed between a processing form of a content included in the content list and the presentation condition. If the processing form of the content matching the presentation condition is included in the content list, the content is further extracted as a limited content list and stored in the RAM (the subsequent processing is similar to Embodiment 1).

### <Embodiment 2: Flow of processing of Example 2>

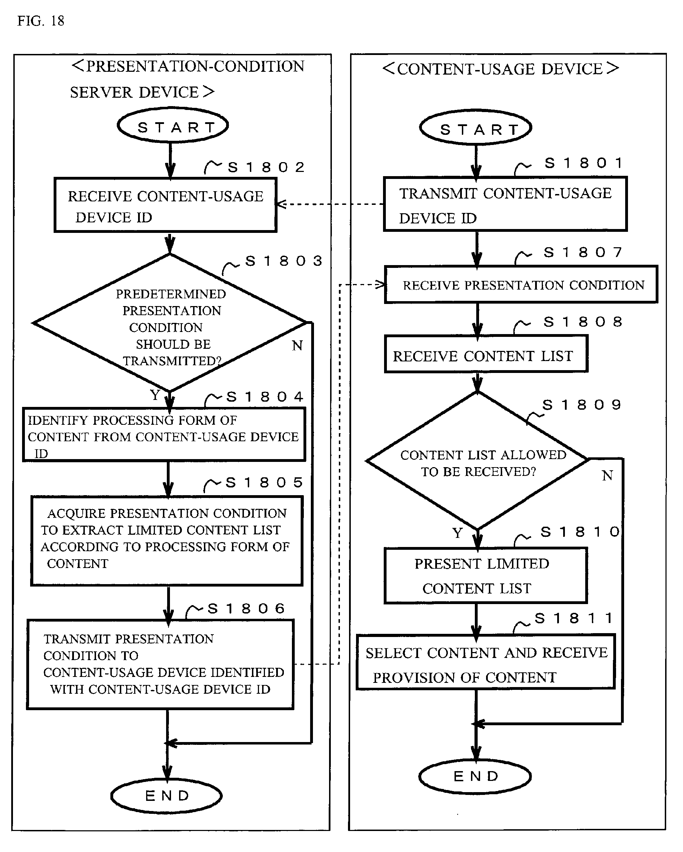

Fig. 18 explains an example of a flow of processing focused on transaction between the content-usage device and the presentation-condition server device in the content service system of the present example. The content-usage device outputs a content-usage device ID to the presentation-condition server device (S1801), and the presentation-condition server device acquires this (S1802). Subsequently, the presentation-condition server device determines whether or not to transmit a predetermined presentation condition by using the acquired content-usage device ID (S1803). In the case of a determination result that the presentation condition should be transmitted, the presentation-condition server device identifies the processing form of the content of the content-usage device from the outputted content-usage device ID (S1804) and acquires a presentation condition for extracting a limited content list including a list of contents according to the processing form of the identified content (S1805). Subsequently, the acquired presentation condition is transmitted to the content-usage device identified by the content-usage device ID (S1806), while if the determination result is that the presentation condition should not be transmitted, the processing is finished.

Subsequently, the content-usage device receives the presentation condition from the presentation-condition server device (S1807). Moreover, the content-usage device receives a content list from the content-list server device (S1808). After that, the content-usage device determines whether or not a content allowed to be received by the content list is included on hte basis of the presentation condition (S1809). In the case of the determination result that the content list allowed to be received is included, a limited content list which is a part of a list of the content list is extracted and presented to the user (S1810), and the user selects the content or the like and receives provision of the content (S1811). In the case of the determination result that there is no content list allowed to be received, the processing is finished.

### <Embodiment 2: Effect of Example 2>

In the content service system according to the invention of the present example, by identifying the processing form of the content of the content-usage device and presenting a limited content list, only a content according to a processing capacity of the content-usage device is presented to the user. Since the presented information is limited to those usable, selection can be made easily, and convenience for the user is high.

### <Embodiment 2: Outline of Example 3>

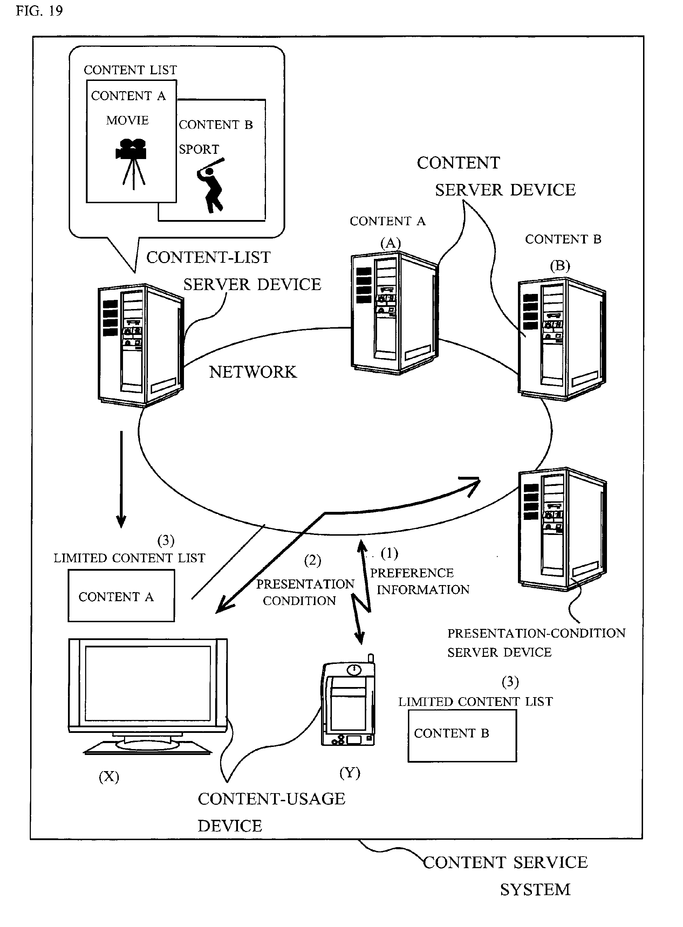

Fig. 19 illustrates an example of a content service system of the present example. First, a user inputs preference information representing preference relating to a content to be used in a content-usage device and transmits it (1). Here, as a genre in which the user is interested, assume that a movie is inputted from the content-usage device (X) and sports from the content-usage device(Y). The presentation-condition server device receives the preference information and acquires and transmits a presentation condition for extracting a limited content list including a list of contents according to the received preference information (2). At this time, a presentation condition according to the preference information is transmitted to the respective content-usage device, that is, a presentation condition for extracting a limited content list including a list of contents of movies and the like to the content-usage device (X) and a list of contents of sports and the like to the content-usage device (Y), for example. Upon receipt of that, the content-usage device extracts a limited content list from a content list on the basis of the received presentation condition (3). Here, a limited content list including a content A such as movies and the like on the content-usage device (X) and a limited content list including a content B such as sports and the like on the content-usage device (Y) are extracted and presented to the user.

### <Embodiment 2: Functional configuration of Example 3>

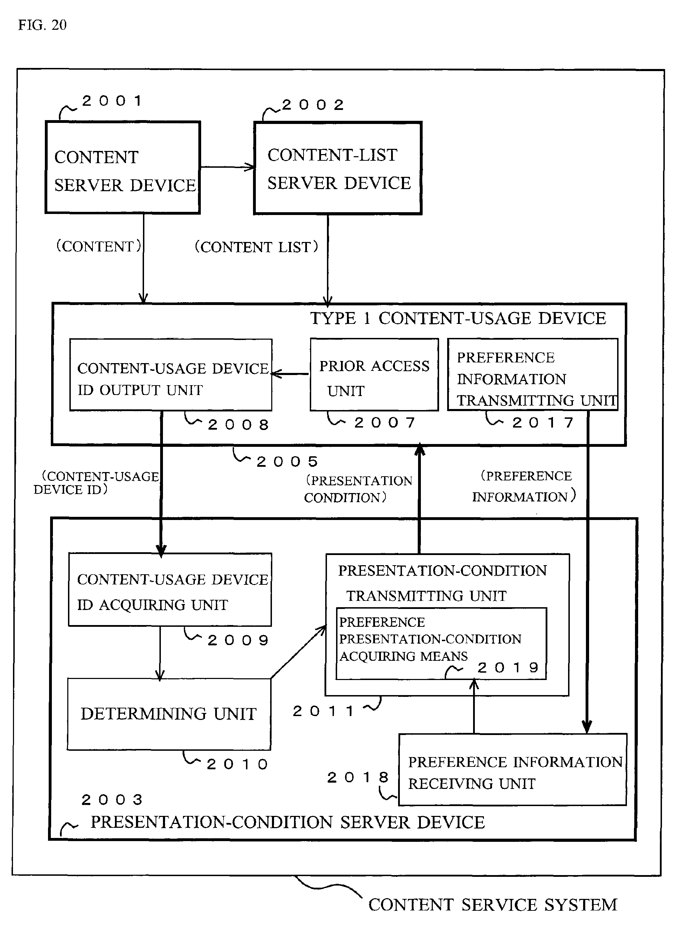

Fig. 20 illustrates an example of a functional block of a content service system in the present example. The content service system of the present embodiment illustrated in Fig. 20 is composed of a "content server device" (2001), a "content-list server device" (2002), a "presentation-condition server device" (2003), and a "content-usage device". Here, since the content-usage device can access the presentation-condition server device, it is "type 1 content-usage device" (2005), and the type 1 content-usage device has a "prior access unit" (2007), a "content-usage device ID output unit" (2008), and moreover, a "preference information transmitting unit" (2017). Moreover, the presentation-condition server device has a "content-usage device ID acquiring unit" (2009), a "determining unit" (2010), a "presentation-condition transmitting unit" (2011), and moreover, a "preference information receiving unit" (2018), and the presentation-condition transmitting unit (2011) further has "preference presentation-condition acquiring means" (2019). Since each of the constituent elements from 2001 to 2011 is the same as that in Figs. 3 to 6, the explanation will be omitted. Moreover, this functional block is based on Embodiment 1, but the attribute information transmitting unit of the content-usage device, the attribute information receiving unit of the presentation-condition server device, the attribute presentation-condition acquiring means or the processing-form identifying unit of the presentation-condition server device, and the presentation-condition acquiring means by processing form or both may be provided.

The "preference information transmitting unit" (2017) of the type 1 content-usage device transmits preference information to the presentation-condition server device. The preference information is information representing preference relating to a user's usage content inputted by the user and is assumed to be inputted by selecting a genre in which the user is interested. The preference information may be configured such that not only large classification such as movies and sports, for example, but also detailed classification such as designation of Japanese movies or comedies and the like for movies or as designation of baseball game relay broadcasting or a sports news and the like for sports, for example, can be inputted.

The "preference information receiving unit" (2018) of the presentation-condition server device receives the preference information transmitted from the type 1 content-usage device.

The "preference presentation-condition acquiring means" (2019) of the presentation-condition transmitting unit (2011) acquires a presentation condition for extracting a limited content list including a list of contents according to the received preference information. Assume that preference information designating a movie is received from the content-usage device (X) and preference information designating sports is received from the content-usage device (Y), a presentation condition for extracting a limited content list including a list of contents relating to movies is transmitted to the content-usage device (X) and a list of contents relating to sports to the content-usage device (Y).

### <Embodiment 2: Hardware configuration of Example 3>

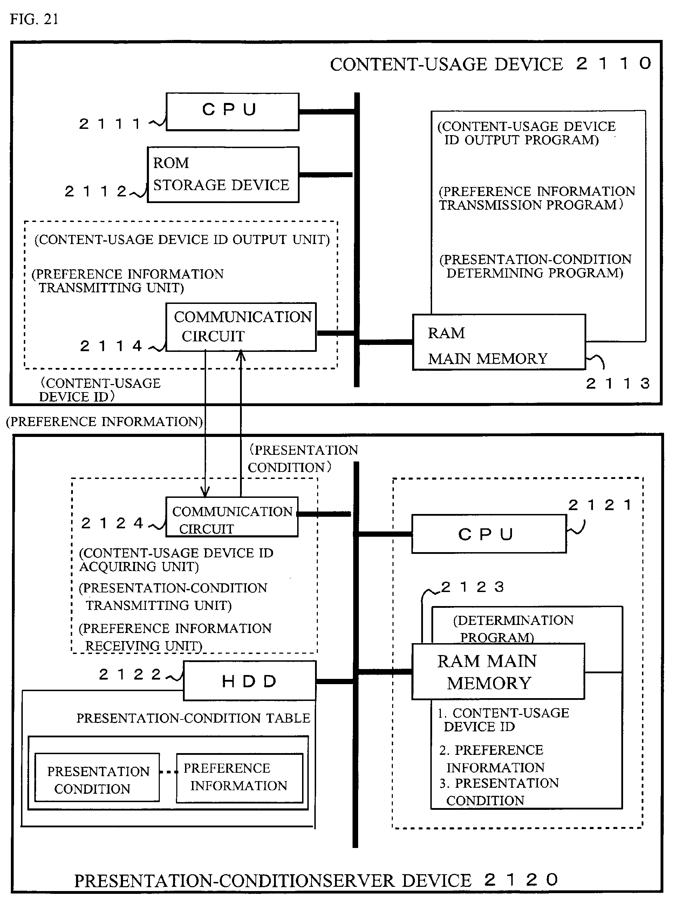

Fig. 21 is an outline view particularly illustrating an example of a hardware configuration of the content-usage device and the presentation-condition server device in the content service system of the present example. The hardware configurations of the content-usage device and the presentation-condition server device have been already explained by using Fig. 17, and new units will be mainly explained.

First, when the content-usage device (2110) receives an operation of an input of preference information from a user via the input device, this serves as a trigger, and a CPU (2111) executes a preference information transmission program developed in the work area of a RAM (2113). The preference information transmission program transmits preference information to a presentation-condition server device (2120) via a communication circuit (2114). An input operation of selecting a genre of a content in which the user is interested or the like corresponds to the operation of transmission of the preference information, and by inputting this kind of information, the preference information is transmitted. More specifically, a table representing various types of preference information is held in advance in a ROM (2112) and presented on a display or the like so that the user can make selection.

Subsequently, the presentation-condition server device (2120) receives the preference information transmitted from the content-usage device (2110) via a communication circuit (2124) and stores it once in a data area of a RAM (2123) and the like. At this time, a content-usage device ID is also stored in the data area of the RAM and the like, and by using this as a trigger, the determination program is executed. The determination program determines whether or not to transmit a predetermined presentation-condition by using the acquired content-usage device ID. That is, a CPU (2121) reads out a presentation condition stored in an HDD (2122) and makes a search by using the content-usage device ID as a key. At this time, the HDD also holds a presentation condition relating to the preference information. If the preference information represents a "movie content", the presentation condition precludes contents other than the movie. The applicable presentation condition is transmitted to the content-usage device via the communication circuit.

The content-usage device extracts a limited content list from a content list by using the received presentation condition. For example, if the presentation condition limits a content provider, comparison processing is executed between identification information of the content provider included in the content list and the presentation condition. If the identification information of the content provider matching the presentation condition is included in the content list, the content is extracted as a limited content list. Moreover, if the presentation condition limits a genre of a content, comparison processing is executed between the information representing the genre of the content included in the content list and the presentation condition. If the content of the genre matching the presentation condition is included in the content list, the content is extracted as the limited content list and stored in the RAM (the subsequent processing is similar to Embodiment 1).

### <Embodiment 2: Flow of processing of Example 3>

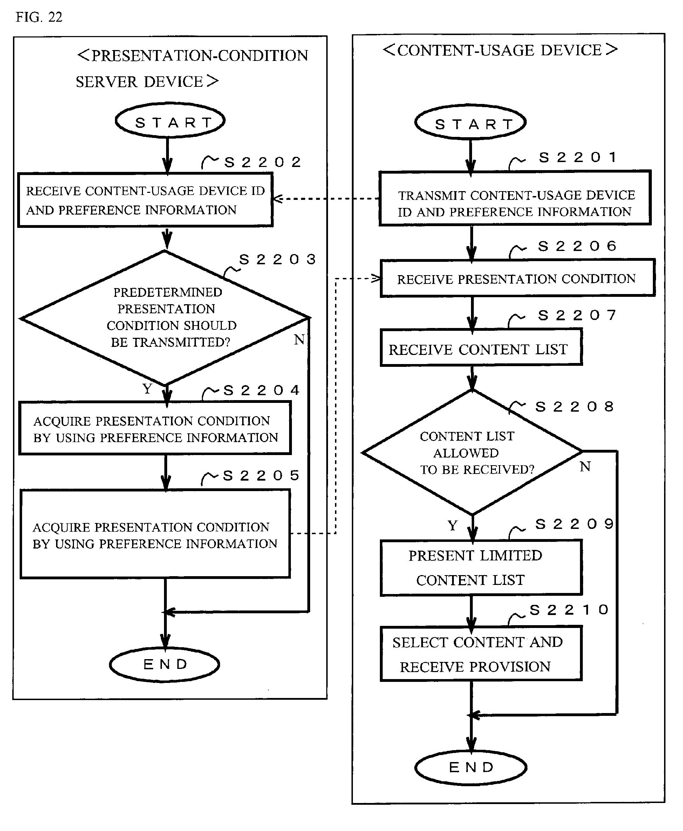

Fig. 22 explains an example of a flow of processing focused on transaction between the content-usage device and the presentation-condition server device in the content service system of the present example. The content-usage device outputs a content-usage device ID and preference information to the presentation-condition server device (S2201), and the presentation-condition server device acquires this (S2202). Subsequently, the presentation-condition server device determines whether or not to transmit a predetermined presentation condition by using the acquired content-usage device ID (S2203). In the case of a determination result that the presentation condition should be transmitted, the presentation-condition server device acquires a presentation condition for extracting a limited content list including a list of contents according to the acquired preference information (S2204). Subsequently, the acquired presentation condition is transmitted to the content-usage device identified by the content-usage device ID (S2205), while if the determination result is that the presentation condition should not be transmitted, the processing is finished.

Subsequently, the content-usage device receives the presentation condition from the presentation-condition server device (S2206). Moreover, the content-usage device receives a content list from the content-list server device (S2207). After that, the content-usage device determines whether or not a content allowed to be received by the content list is included on the basis of the presentation condition (S2208). In the case of the determination result that the content list allowed to be received is included, a limited content list which is a list of a part of the content list is extracted and presented to the user (S2209), and the user selects the content or the like and receives provision of the content (S2210). In the case of the determination result that there is no content list allowed to be received, the processing is finished.

### <Embodiment 2: Effect of Example 3>

In the content service system according to the invention of the present example, by means of transmission by a user of the preference information representing preference relating to the usage content of the user from the content-usage device, only a content list according to the preference information is presented to the user. Since the presented information is limited to those in which the user is interested, selection processing can be executed from useful information, and convenience for the user is high.

### <Embodiment 2: Outline of Example 4>

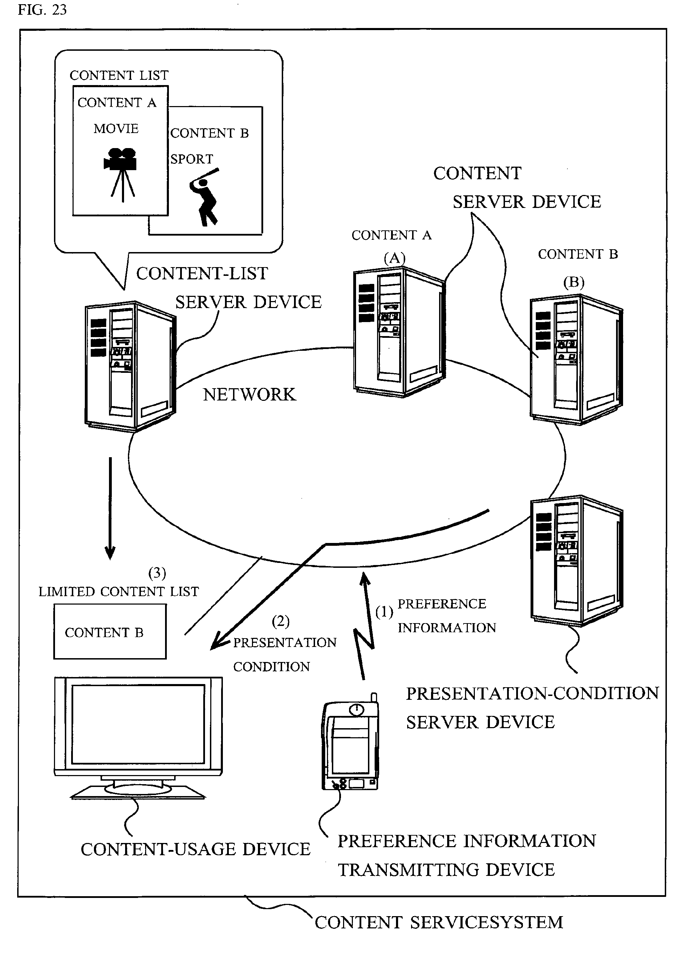

Fig. 23 illustrates an example of a content service system of the present example. The present example is different in a point in which a preference information transmitting device is introduced instead of the content-usage device (Y) in example 3. First, the user inputs and transmits preference information representing preference relating to the usage content of the user in the preference information transmitting device (1). Here, assume that the user inputs sports as a genre in which the user is interested from the preference information transmitting device. The presentation-condition server device receives this preference information and acquires a presentation condition for extracting a limited content list including a list of contents according to the received preference information. The presentation condition is transmitted to the content-usage device associated with the preference information transmitting device (2). At this time, a presentation condition for extracting a limited content list including a list of contents such as sports and the like is transmitted to the content-usage device in accordance with the preference information from the preference information transmitting device. Upon receipt of this, the content-usage device extracts a limited content list from the content list on the basis of the received presentation condition (3). Here, in the content-usage device, a limited content list including the content B such as sports and the like is extracted and presented to the user.

### <Embodiment 2: Functional configuration of Example 4>

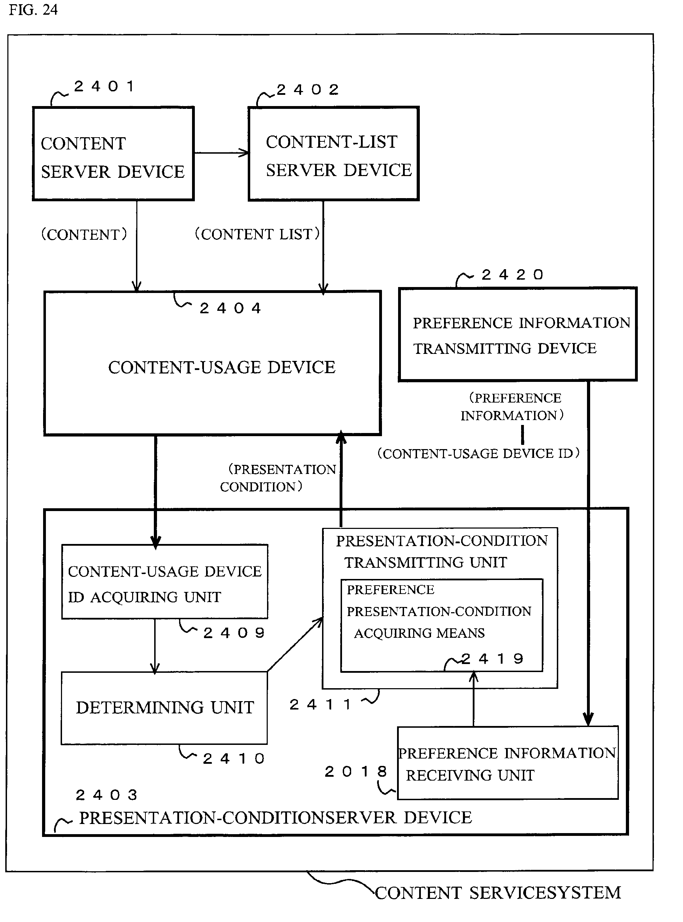

Fig. 24 illustrates an example of a functional block of a content server system in the present example. The content service system of the present embodiment illustrated in Fig. 24 is composed of a "content server device" (2401), a "content-list server device" (2402), a "presentation-condition server device" (2403), a "content-usage device" (2404), and moreover, a "preference information transmitting device" (2420). Moreover, the presentation-condition server device has a "content-usage device ID acquiring unit" (2409), a "determining unit" (2410), a "presentation-condition transmitting unit" (2411), and moreover, a "preference information receiving unit" (2421), and the presentation-condition transmitting unit (2411) further has "preference presentation-condition acquiring means" (2419). Since each of the constituent elements from 2401 to 2411 is the same as that in Figs. 3 to 6, the explanation will be omitted. Moreover, this functional block is based on Embodiment 1, but each unit of the content-usage device, the attribute information receiving unit of the presentation-condition server device, the attribute presentation-condition acquiring means or the processing-form identifying unit of the presentation-condition server device, and the presentation-condition acquiring means by processing form or both may be provided.

The "preference information transmitting device" (2420) transmits preference information to the presentation-condition server device. The preference information is information representing preference relating to a usage content of a user inputted by the user and is assumed to be inputted by selecting a genre in which the user is interested and the like. The preference information transmitting device is not particularly limited regarding the other functions as long as it is capable of transmitting the preference information, and a TV device, a recording device, a game machine, a mobile terminal device including a smart phone and the like can be cited, for example. At this time, it may be so configured that user information is associated with the preference information and transmitted so that an owner of the transmitted preference information can be identified. In this case, when the content-usage device ID is outputted from the content-usage device, by associating the same user information with the content-usage device ID and outputting it, it is known that the user of the content-usage device is the user having the preference transmitted from the preference information transmitting device.

The "preference presentation-condition acquiring means" (2419) of the presentation-condition server device acquires a presentation condition for extracting a limited content list including a list of contents according to the received preference information. Assume that preference information designating sports is received from the preference information transmitting device, a presentation condition for extracting a limited content list including a list of contents such sports and the like is transmitted to the content-usage device identified by the content-usage device ID with which the same user information as the user information associated with the preference information is associated.

Alternatively, when the preference information is to be transmitted from the preference information transmitting device, it may be so configured that the content-usage device ID of the content-usage device requesting transmission of the presentation condition for receiving provision of the content is associated with the preference information and transmitted. In this case, the presentation-condition server device acquires a presentation condition for extracting a limited content list including a list of contents according to the received preference information and transmits the presentation condition to the content-usage device identified by the content-usage device ID associated with the preference information.

### <Embodiment 2: Hardware configuration of Example 4>

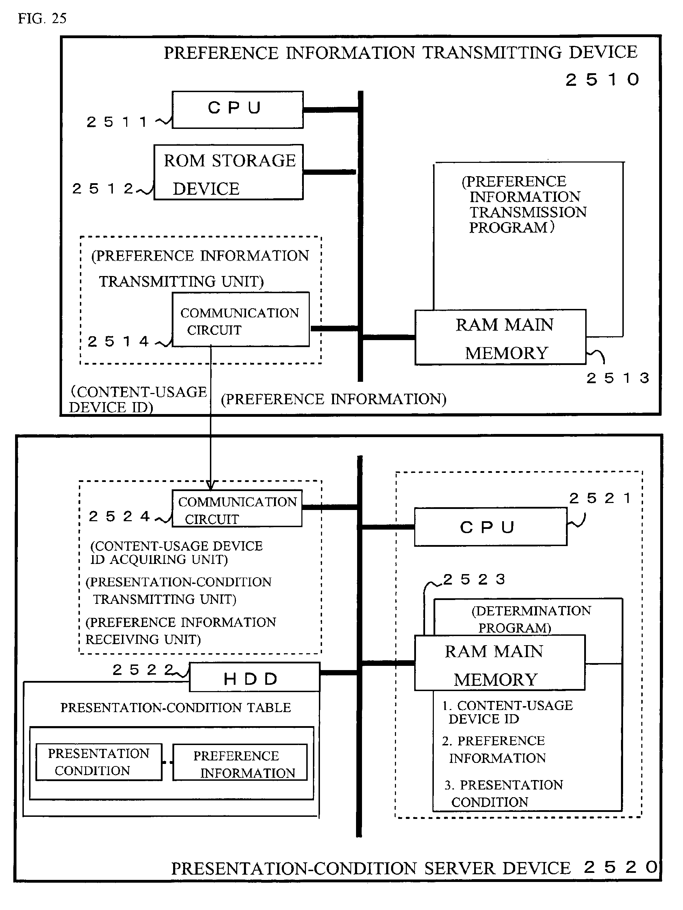

Fig. 25 is an outline view particularly illustrating an example of a hardware configuration of the preference information transmitting device, the content-usage device, and the presentation-condition server device in the content service system of the present example. By using this figure, operations of the respective hardware constituting units in processing execution of each device of the content service system will be explained.

A preference information transmitting device (2510) has a "CPU (central processing unit)" (2511), a "ROM (storage device)" (2512), a "RAM (main memory)" (2513), and a "communication circuit" (2514), and though not shown in the figure, other input devices, a display and the like are provided. Moreover, a presentation-condition server device (2520) is provided with a "CPU (central processing unit)" (2521), an "HDD" (2522), a "RAM (main memory)" (2523), and a "communication circuit" (2524). Since the hardware configurations of the content-usage device and the presentation-condition server device have been already explained by using Fig. 21, only new portions will be mainly explained.

First, when the preference information transmitting device (2510) receives an operation of an input of preference information from a user via the input device, this serves as a trigger, and the CPU (2511) executes a preference information transmission program developed in the work area of the RAM (2513). The preference information transmission program transmits preference information to the presentation-condition server device (2520) via the communication circuit (2514). An input operation of selecting a genre of a content in which the user is interested or the like corresponds to the operation of transmission of the preference information, and by inputting this kind of information, the preference information is transmitted. More specifically, a table representing various types of preference information is held in advance in the ROM (2512) and presented on a display or the like so that the user can make selection.

At this time, it may be so configured that user information for identifying the user of the preference information transmitting device is associated with the preference information and transmitted. In this case, the user information held in the ROM (2512) in advance is read out, and this is associated with the preference information at an input and transmitted. Alternatively, in order to receive provision of a content, a content-usage device ID of the content-usage device requesting transmission of the presentation condition may be associated with the preference information and transmitted. In that case, the content-usage device ID held in the ROM (2512) in advance is read out, and this is associated with the preference information at an input and transmitted.

Subsequently, the presentation-condition server device (2520) receives the preference information transmitted from the preference information transmitting device (2510) via the communication circuit (2524) and stores once in the data area of the RAM (2523) or the like. At this time, the content-usage device ID associated with the preference information or the like is also stored in the data area or the like of the RAM similarly, and this is used as a trigger for executing the determination program. The determination program determines whether or not to transmit the predetermined presentation condition by using the acquired content-usage device ID. That is, the CPU (2521) reads out the presentation condition held in the HDD (2522) and searches the presentation conditions and narrows them by using the content-usage device ID as a key. At this time, the presentation condition relating to the preference information is also held in the HDD. If the preference information represents "sports", the presentation condition precludes contents other than the genre relating to sports. The applicable presentation condition is transmitted to the content-usage device identified by the content-usage device ID via the communication circuit.

### <Embodiment 2: Flow of processing of Example 4>

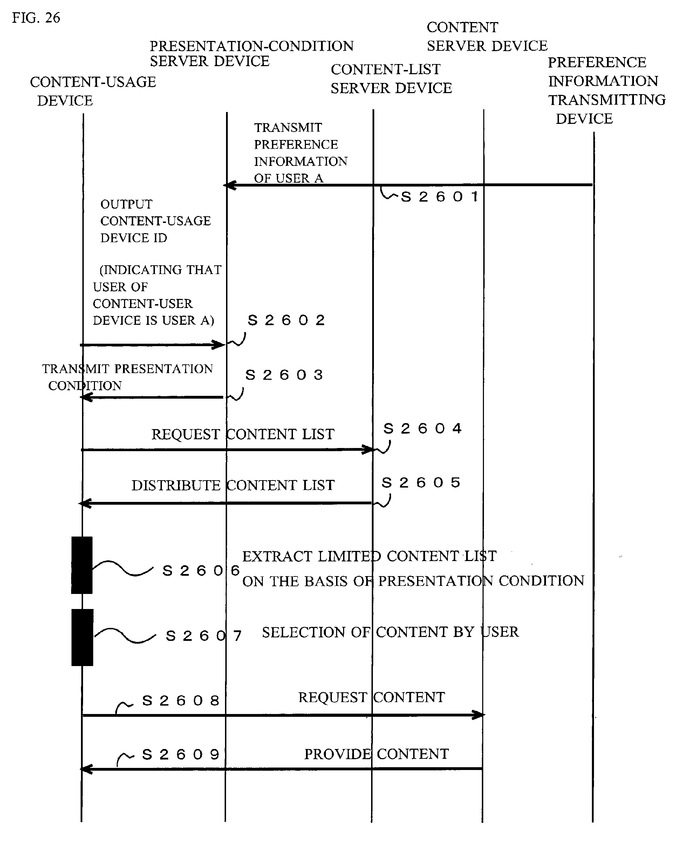

Fig. 26 illustrates a flow of a series of processing in a content service system of the present example. The preference information transmitting device transmits the preference information to the presentation-condition server device (S2601). At this time, user information for identifying a user of the preference information transmitting device might be associated with the preference information. The content-usage device outputs the content-usage device ID (S2602). At this time, if the same user information as the above user information is associated with the content-usage device ID, the presentation-condition server device transmits the presentation condition according to the preference information transmitted from the preference information transmitting device to the content-usage device identified by the content-usage device ID (S2603). Alternatively, when the preference information transmitting device transmits the preference information, the content-usage device ID of the content-usage device which desires to receive provision of the content might be associated with the preference information and transmitted, and in this case, a step of outputting the content-usage device ID from the content-usage device (S2602) can be omitted. Since the subsequent processing is similar to that illustrated in Fig. 9, the explanation will be omitted.

### <Embodiment 2: Effect of Example 4>

In the content service system according to the invention of the present example, the user can transmit the preference information representing the preference relating to the usage content of the user by using the preference information transmitting device and present the content list according to the preference information to the same user in the content-usage device which is another device. Since the content list can be acquired in the content-usage device with high content processing capacity and provision of the content can be received even if the preference information is transmitted from the preference information transmitting device, the number of types of usable contents increases, and convenience for the user is high.

### [Reference Signs List]

- 0301: content server device
- 0302: content-list server device
- 0303: presentation-condition server device
- 0304: content-usage device

## Claims

1. A content service system comprising:
a plurality of content server devices each providing a content usable on a network to a content-usage device;
a content-list server device for distributing a content list which is a list of contents provided by the plurality of content server devices;
a presentation-condition server device for transmitting a presentation condition for extracting a limited content list which is a list of a part of contents presented to a user on the content-usage device from the distributed content lists; and
a plurality of the content-usage devices each receiving the content list from the content-list server device and using the content provided by the content server device.

2. The content service system according to claim 1, wherein each of the plurality of content-usage devices includes:
a type 1 content-usage device which can access the presentation-condition server device and presents to the user the limited content list which is a list of a part of received content list from the presentation condition received from the presentation-condition server device and the content list received from the content-list server device; and
a type 2 content-usage device which cannot access the presentation-condition server device but receives the content list from the content-list server device.

3. The content service system according to claim 2, wherein
the type 1 content-usage device has a prior access unit which accesses the presentation-condition server device prior to receipt of the content list when the content list is to be received from the content-list server device.

4. The content service system according to claim 2 or 3, wherein
the type 1 content-usage device has a content-usage device ID output unit for outputting a content-usage device ID which is an ID for having itself identified on the network; and
the presentation-condition server device has:
a content-usage device ID acquiring unit for acquiring the content-usage device ID outputted from the type 1 content-usage device;
a determining unit for determining whether or not to transmit a predetermined presentation-condition by using the acquired content-usage device ID; and
a presentation-condition transmitting unit for transmitting the presentation condition to the type 1 content-usage device identified with the content-usage device ID when a determination result in the determining unit is that the predetermined presentation condition should be transmitted.

5. The content service system according to claim 4, wherein
the type 1 content-usage device has an attribute information transmitting unit for transmitting attribute information which is information representing an attribute of a content desired to be used to the presentation-condition server device;
the presentation-condition server device has an attribute information receiving unit for receiving the attribute information transmitted from the type 1 content-usage device; and
the presentation-condition transmitting unit has attribute presentation condition acquiring means for acquiring the presentation condition for extracting a limited content list including a list of contents having the attribute desired to be used on the type 1 content-usage device by using the received attribute information.

6. The content service system according to claim 4 or 5, wherein
the presentation-condition server device has a processing form identifying unit for identifying a processing form of a content of the content-usage device from the content-usage device ID outputted from the type 1 content-usage device; and
the presentation-condition transmitting unit has means for acquiring presentation condition by processing form for acquiring the presentation condition for extracting a limited content list including the list of contents according to the processing form of the identified content.

7. The content service system according to any one of claims 4 to 6, wherein
the type 1 content-usage device has a preference information transmitting unit for transmitting preference information which is information representing preference relating to a usage content of a user inputted by the user to the presentation-condition server device;
the presentation-condition server device has a preference information receiving unit for receiving the preference information transmitted from the type 1 content-usage device; and
the presentation-condition transmitting unit has preference presentation-condition acquiring means for acquiring a presentation condition for extracting a limited content list including a list of contents according to the received preference information.

8. The content service system according to any one of claims 4 to 6, comprising
a preference information transmitting device for transmitting preference information which is information representing preference relating to a usage content of a user inputted by the user to the presentation-condition server device, wherein
the presentation-condition server device has a preference information receiving unit for receiving the preference information transmitted from the preference information transmitting device; and
the presentation-condition transmitting unit has preference presentation-condition acquiring means for acquiring a presentation condition for extracting a limited content list including a list of contents according to the received preference information.

9. The presentation-condition server device according to any one of claims 1 to 8.

10. The content-usage device according to claim 2 or 3.

11. A program for causing a presentation-condition server device to execute steps, in a content service system comprising:
a plurality of content server devices each providing a content usable on a network to a content-usage device;
a content-list server device for distributing a content list which is a list of contents provided by the plurality of content server devices;
a presentation-condition server device for transmitting a presentation condition for extracting a limited content list which is a list of a part of contents presented to a user on the content-usage device from the distributed content lists; and
a plurality of the content-usage devices each receiving the content list from the content server device and using the content provided by the content server device,
the steps comprising:
a content-usage device ID acquiring step of acquiring a content-usage device ID outputted from the content-usage device;
a determining step of determining whether or not to transmit a predetermined presentation condition by using the acquired content-usage device ID; and
a presentation-condition transmitting step of transmitting a presentation condition to the content-usage device identified with the content-usage device ID when a determination result at the determining step is that the predetermined presentation condition should be transmitted.
